# EUROPEAN PATENT APPLICATION

(11) **EP 2 571 276 A1**
(43) Date of publication of application: **20.03.2013**
(21) Application number: 11780410.4
(22) Date of filing: 08.02.2011
(51) Int. Cl.: H04N 13/04, G02B 27/22, G02F 1/13, G02F 1/133, G09G 3/20, G09G 3/34, G09G 3/36

(54) **STEREOSCOPIC IMAGE DISPLAY METHOD AND STEREOSCOPIC IMAGE DISPLAY DEVICE**

(30) Priority: 14.05.2010 JP 2010112625
(71) Applicant: Sharp Kabushiki Kaisha, Osaka-shi, Osaka 545-8522 (JP)
(72) Inventor: HIRATA, Mitsuaki, Osaka-shi, Osaka 545-8522 (JP); UCHIDA, Toshihisa, Osaka-shi, Osaka 545-8522 (JP)
(74) Representative: Goddar, Heinz J.
(86) International application number: PCT/JP2011/052638
(87) International publication number: WO 2011/142152

(57) **Abstract**

A stereoscopic video image display method according to the present invention is such that in a case where switching between a right-eye image and a left-eye image, both of which accommodate a parallax that allows an observer to visually recognize a stereoscopic video image, is done once, for example, every two frames, a gray scale transition emphasis process is carried out in each of the frames, and that in a case where, in a visual recognition period (e.g. frame F2) during which the observer is allowed to visually recognize a stereoscopic video image, display luminance of a target pixel which belongs to a parallax region is made transition from display luminance corresponding to 160 gray scale to display luminance corresponding to 32 gray scale, a gray scale transition emphasis process is carried out so that an average luminance during the visual recognition period becomes substantially equal to the display luminance corresponding to 32 gray scale.

## Description

### Technical Field

The present invention relates to a stereoscopic video image display method and a stereoscopic video image display device both of which enable a right-eye image and a left-eye image, both of which accommodate a parallax, to be displayed by time division on a liquid crystal display device so that an observer can visually recognize a stereoscopic video image by using shutter glasses which have a right shutter and a left shutter open and close alternately.

### Background Art

In recent years, liquid crystal display devices having excellent characteristics of low profile, lightweight, and low power consumption have come into widespread use in various applications including displays for portable electronic devices, displays for personal computers, and televisions of various kinds of sizes.

Further, there has been studied long a technique of allowing an observer to visually recognize a stereoscopic video image. For example, a stereoscopic video image display that allows a video image to be appeared to pop out of the display screen enhances the realism, entertainment, and others of content. Therefore, incorporating the stereoscopic video image display function into the liquid crystal display devices used in various kinds of applications means increasing the added values of the liquid crystal display devices. Thus, the study for stereoscopic video image display with use of a liquid crystal display device has been increasingly active.

Patent Literature 1 listed below discloses a stereoscopic video image display technology of alternately displaying a left-eye video image and a right-eye video image by time division on a liquid crystal display so that a stereoscopic video image can be visually recognized by a user who wears shutter glasses having a left-eye shutter and a right-eye shutter.

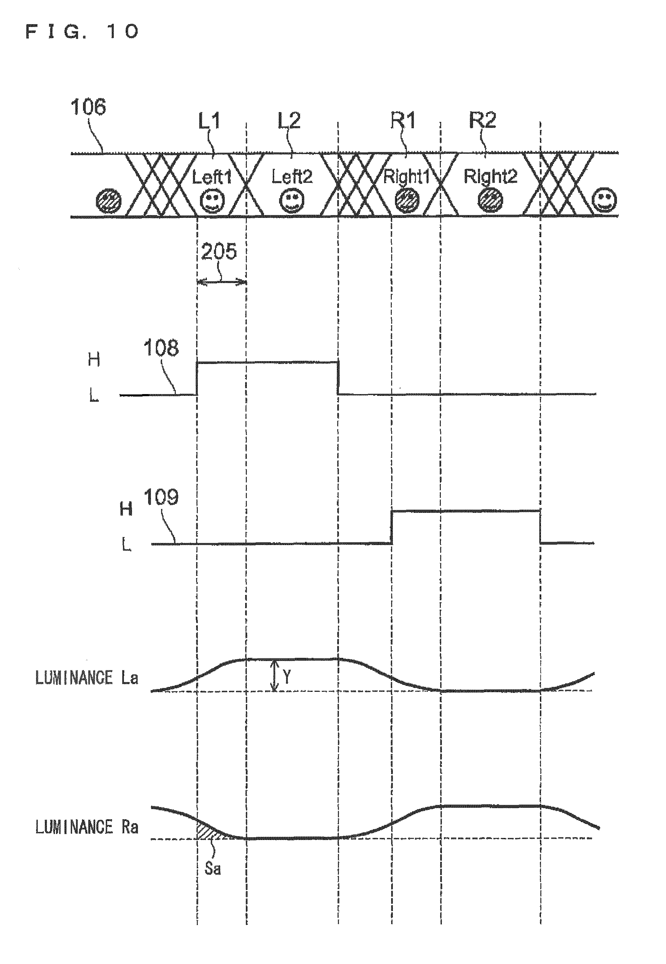

Fig. 10 is a timing chart showing frame data 106 as a video signal for carrying out the stereoscopic video image display and control signals 108 (for left eye) and 109 (for right eye) of a liquid crystal shutter. As shown in Fig. 10, the liquid crystal display sequentially shows a first left-eye frame L1 and a second left-eye frame L2, which is of the same image as that of the first left-eye frame L1, during a display period for the left-eye video image. Subsequently, the liquid crystal display sequentially shows a first right-eye frame R1 and a second right-eye frame R2, which is of the same video image as that of the first right-eye frame R1, during a display period for the right-eye video image. This means that two frames of the same video image are displayed in succession during each of the display period for the right-eye video image and the display period for the left-eye video image. This enables prolonging of the times determined by the frames of the right-eye video image and the frames of the left-eye video image, thus allowing the stereoscopic video image shown to be easily visible, as described in Patent Literature 1.

### Citation List

### Patent Literatures

### Patent Literature 1

Japanese Patent Application Publication, Tokukai, No. 2009-232249 A (Publication Date: October 8, 2009)

### Summary of Invention

### Technical Problem

The stereoscopic video image display technique described in Patent Literature 1 prolongs duration of time the user visually recognize each of the right-eye video image and the left-eye video image. This enables display of bright video image display, but ignores the problem that crosstalk between the right-eye video image and the left-eye video image occurs due to a slow response speed of liquid crystal.

When the crosstalk occurs, the right-eye video image is unfortunately visually recognized by the user in a first half (period 205 in Fig. 10) of the display period for the left-eye video image. In this case, the image appears double, which causes loss of image display quality, and loss of a three-dimensional appearance, and/or a failure to realize visual recognition of a stereoscopic video image. This is because stereoscopic display can be recognized only when the left-eye video image and the right-eye video image are visually recognized separately in such a manner that only the left-eye video image is viewed by user's left eye and only the right-eye video image is viewed by user's right eye.

A waveform of luminance La shown in Fig. 10 represents a variation in luminance provided by a certain pixel driven in accordance with frame data of the first left-eye frame L1 and the second left-eye frame L2, and a waveform of luminance Ra represents a variation in luminance provided by the same pixel driven in accordance with frame data of the first right-eye frame R1 and the second right-eye frame R2.

As apparent from the waveforms of these luminances La and Ra, in the period 205, the luminance La does not reach a target luminance Y, and the luminance Ra also does not reach a target luminance 0, due to a slow response speed of liquid crystal. That is, in the period 205, there occurs crosstalk in which the right-eye video image is displayed at a low level of gray scale simultaneously with the left-eye video image, as indicated by a shaded region Sa in the waveform of the luminance Ra, although only the left-eye video image is supposed to be displayed in the period 205.

Thus, an objective to be achieved by the present invention is to develop a stereoscopic video image display method that eliminates the occurrence of the above-described crosstalk.

The present invention has been attained in view of the above-described problem, and an object of the present invention is to provide a stereoscopic video image display method and a stereoscopic video image display device, both of which can reduce the occurrence of crosstalk between a right-eye image and a left-eye image in a stereoscopic video image display technology of displaying the right-eye image and the left-eye image in such a manner that switching between the right-eye image and the left-eye image is done once every frame set, so that a user can visually recognize a stereoscopic video image through shutter glasses which have a right shutter and a left shutter open and close alternately.

### Means for Solving the Problem

In order to solve the above-described problem, a stereoscopic video image display method according to the present invention is a stereoscopic video image display method of (1) displaying a right-eye image and a left-eye image, both of which accommodate a parallax allowing an observer to visually recognize a stereoscopic video image, on an image display surface in such a manner that switching between the right-eye image and the left-eye image is done once every frame set, and that luminance provided by a target pixel which belongs to a parallax region that forms a parallax between the right-eye image and the left-eye image makes transition between a first display luminance for displaying an object to be stereoscopically displayed and a second display luminance for displaying a background image,
wherein
(2) a gray scale transition emphasis process is carried out in each of frames making up the frame set, and
(3) the gray scale transition emphasis process is carried out so that an average luminance of the target pixel during a visual recognition period in which the observer is allowed to visually recognize a stereoscopic video image becomes substantially equal to a target display luminance, which is either the first display luminance or the second display luminance.

According to the above-described arrangement, in a case where the right-eye image and the left-eye image both of which accommodate a parallax are displayed on the image display surface to allow the observer to visually recognize a stereoscopic video image, the outlines of the right-eye image and the left-eye image are shown in different positions. It can be therefore assumed that there exists a parallax region surrounded by the outlines of the right-eye image and the left-eye image.

This parallax region is a region that can be visually recognized at the occurrence of crosstalk between the right-eye image and the left-eye image and cannot be visually recognized when no crosstalk occurs. More specifically, assume that the object to be stereoscopically displayed is displayed in a background image in accordance with the intersection method, for example. In this case, when the crosstalk occurs during a display period for the left-eye image, a left-hand parallax region that is just on the left side of the object to be stereoscopically displayed as the left-eye image is visually recognized, for example. That is, the left-hand parallax region visually recognized should not appear during the display period for the left-eye image and corresponds to the left-hand part of the outline of the object to be stereoscopically displayed as the right-eye image. When no crosstalk occurs, the background image that should be visually recognized appears in the left-hand parallax region.

Further, during the display period for the right-eye image, in the left-hand parallax region, the left-hand part of the outline of the object to be stereoscopically displayed as the right-eye image is displayed.

Therefore, in a proper display state where no crosstalk occurs, luminance provided by a target pixel which belongs to the left-hand parallax region makes transition between a first display luminance for displaying the object to be stereoscopically displayed as the right-eye image and a second display luminance for displaying the background image.

In short, a target display luminance for the target pixel which belongs to the left-hand parallax region, when switching from the left-eye image to the right-eye image takes place for display of the right-eye image, is the first display luminance for displaying the object to be stereoscopically displayed as the right-eye image. On the other hand, when switching from the right-eye image to the left-eye image takes place for display of the left-eye image, a target display luminance is the second display luminance for displaying the background image.

Therefore, in order to suppress the occurrence of crosstalk, it is important that luminance provided by the target pixel which belongs to the parallax region is caused to reach the target display luminance at least during a visual recognition period in which the observer is allowed to visually recognize the stereoscopic video image.

An effective solution to the above-described crosstalk is a gray scale transition emphasis process (so-called overshoot driving) by which a response speed of the pixels is increased. This is because the crosstalk occurs in a case where a response speed of the pixels is slow upon application of a signal.

However, when an intensity of the gray scale transition emphasis process is too strong, the luminance of the target pixel goes beyond (exceeds or falls below) the target display luminance. Also in this case, there occurs the crosstalk which causes the parallax region to be visually recognized.

In view of this, in the present invention, the gray scale transition emphasis process is carried out so that the average luminance of the target pixel during the visual recognition period becomes substantially equal to the target display luminance. This optimizes the intensity of the gray scale transition emphasis process, thus suppressing the occurrence of crosstalk as much as possible. As a result, the observer can visually recognize an excellent stereoscopic video image.

Note that the visual recognition period can be provided by a method of turning on a light source that emits light for video image display, a method of causing a left shutter or a right shutter of the shutter glasses to be opened, or the like method.

In order to solve the above-described problem, a stereoscopic video image display method according to the present invention is a stereoscopic video image display method of (1) displaying a right-eye image and a left-eye image, both of which accommodate a parallax allowing an observer to visually recognize a stereoscopic video image, on an image display surface in such a manner that switching between the right-eye image and the left-eye image is done once every frame set, and that luminance provided by a target pixel which belongs to a parallax region that forms a parallax between the right-eye image and the left-eye image makes transition between a first display luminance for displaying an object to be stereoscopically displayed and a second display luminance for displaying a background image,
wherein
(2) a gray scale transition emphasis process is carried out in each of frames making up the frame set, and
(3) the gray scale transition emphasis process is carried out so that, in a frame other than a first frame that comes immediately after switching to the right-eye image or the left-eye image, an average luminance of the target pixel during a period from a beginning of a second frame until a subsequent switching is substantially equal to a target display luminance, which is either the first display luminance or the second display luminance.

According to the above-described arrangement, in each of the frames making up the frame set, the gray scale transition emphasis process is carried out. Therefore, it is possible to make the luminance of the target pixel close to the target display luminance in the second frame out of the frame set.

That is, in the first frame, a rate of gray scale transition between the first display luminance and the second display luminance is great. That is why the first frame is not recommended to be set to the visual recognition period. In the second frame and subsequent frame(s), the luminance of the target pixel is close to the target display luminance. Therefore, the period from the beginning of the second frame to the subsequent switching can be set to the visual recognition period.

Therefore, the gray scale transition emphasis process is carried out so that the average luminance of the target pixel during a period from the beginning of the second frame until a subsequent switching becomes substantially equal to the target display luminance. As described previously, this, optimizes the intensity of the gray scale transition emphasis process, thus suppressing the occurrence of crosstalk as much as possible.

In order to solve the above-described problem, a stereoscopic video image display device according to the present invention is a stereoscopic video image display device comprising:
(1) an image display surface on which a right-eye image and a left-eye image, both of which accommodate a parallax allowing an observer to visually recognize a stereoscopic video image, are displayed in such a manner that switching between the right-eye image and the left-eye image is done once every frame set, and that luminance provided by a target pixel which belongs to a parallax region that forms a parallax between the right-eye image and the left-eye image makes transition between a first display luminance for displaying an object to be stereoscopically displayed and a second display luminance for displaying a background image,
   the stereoscopic image display device further comprising:
(2) a first processing section;
(3) a second processing section; and
(4) a frame memory,
   wherein (5) the first and second processing sections are fed (i) current video data corresponding to a video signal of a current frame of the right-eye image or the left-eye image and (ii) storage data of the frame memory into which each frame is refreshed in accordance with output of the second processing section;
(6) in order to cause the luminance provided by the target pixel to reach a target display luminance, which is either the first display luminance or the second display luminance, the first processing section generates emphasized video data by selectively subjecting the current video data corresponding to each of the constituent frames that make up the frame set to a gray scale transition emphasis process with a different intensity, in accordance with a degree of transition from the storage data to the current video data which corresponds to each of constituent frames; and
(7) the second processing section obtains, on a basis of the storage data and the current video data, prediction data corresponding to a predicted luminance which the luminance provided by the target pixel will reach through the gray scale transition emphasis process, in accordance with an intensity of the gray scale transition emphasis process for each of the constituent frames, and then rewrites the thus obtained prediction data as the storage data into the frame memory.

According to the above-described arrangement, as mentioned previously, in a proper display state where no crosstalk occurs, the luminance provided by the target pixel which belongs to the parallax region makes transition between the first display luminance for displaying the object to be stereoscopically displayed and the second display luminance for displaying the background image. In order to quickly complete the transition, the first processing section carries out gray scale transition emphasis processes that vary among the successive constituent frames of the same right-eye image or the same left-eye image. Such gray scale transition emphasis processes are carried out as the need arises, as will be described later.

Note that, as mentioned previously, the observer cannot visually recognize the stereoscopic video image in an appropriate manner if the intensity of the gray scale transition emphasis process is too strong or too week. That is, when the luminance of the target pixel falls below or exceeds the target display luminance (the first display luminance or the second display luminance) during the visual recognition period in which the observer is allowed to visually recognize the stereoscopic video image, the cross talk which causes the parallax region to be visually recognized occurs.

In view of this, in order that the luminance of the target pixel can reach the target display luminance more accurately through the gray scale transition emphasis process, the second processing section is provided for obtaining the prediction data for each of the constituent frames. As a resulting of providing the second processing section, a gray scale transition emphasis process for transition from the first display luminance to the second display luminance, for example, is carried out in at least two stages.

First, the first processing section is fed the current video data and the storage data of the frame memory. Then, the first processing section generates emphasized video data by carrying out the first gray scale transition emphasis process to make transition from the storage data to the current video data. As mentioned above, the gray scale transition emphasis process is carried out with an intensity varying by constituent frame as necessary. More specifically, there is no need to carry out the gray scale transition emphasis process with respect to some differences in luminance (differences in gray scale) of the target pixel between the current video data and the storage data. In a case where there is no need to carry out a gray scale transition emphasis process, the first processing section outputs the current video data as it is.

The emphasized video data or the current video data outputted from the first processing section turns into drive data for controlling the luminance of the target pixel which belongs to the parallax region.

Meanwhile, the second processing section is fed the same data (the current video data and the storage data) as the data used in the gray scale transition emphasis process carried out by the first processing section, obtains, in accordance with the intensity of the gray scale transition emphasis process for each of the constituent frames, prediction data corresponding to a predicted luminance which the luminance of the target pixel will reach through the gray scale transition emphasis process carried out by the first processing section, and then rewrites the thus obtained prediction data as the storage data into the frame memory. With this arrangement, the storage data in the frame memory becomes data in a frame immediately preceding the frame corresponding to the current video data.

The prediction data may be obtained by operation from the video data before the gray scale transition and the video data after the gray scale transition. However, for simplification of the process, it is safe that the prediction data are stored in memory as to be associated with these two video data. For example, assume that emphasized video data obtained by the gray scale transition emphasis process using these two video data are practically used to drive a pixel. In this case, a predicted luminance which the luminance of the pixel will reach is measured in advance, prediction data corresponding to the measured luminance is obtained, and the prediction data is then stored as to be associated with the above two video data and the intensity of the gray scale transition emphasis process. With this arrangement, the second processing section can read from the memory the prediction data corresponding to the both the current video data and the storage data and corresponding to the intensity of the gray scale transition emphasis process.

The second processing section obtains the prediction data corresponding to a luminance which the luminance of the target pixel will reach through the gray scale transition emphasis process carried out by the first processing section. This brings about the following advantages. That is, in a case where the prediction data is lower than target current video data, the subsequent gray scale transition emphasis process is carried out by the first processing section in accordance with (i) the prediction data and (ii) current video data in a frame subsequent to the frame corresponding to the current video data used to obtain the prediction data. An intensity (emphasis level) of the subsequent gray scale transition emphasis process differs, selectively in accordance with a degree of transition, from that of the gray scale transition emphasis process that has already carried out. Note that in a case where the prediction data is still lower than the target current video data even after the subsequent gray scale transition emphasis process, another gray scale transition emphasis process may be carried out similarly.

Note that since switching between the right-eye image and the left-eye image takes place once every frame set, each frame among the frame set has the same current video data.

As a result of this, it is possible to facilitate the luminance of the target pixel to more accurately reach the target display luminance through the gray scale transition emphasis process in at least two stages, in which the intensities of the gray scale transition emphasis processes vary as appropriate depending upon the degree of transition.

In a case where prediction data has reached target current video data through the first gray scale transition emphasis process carried out for the first frame out of the frame set, such prediction data matches current video data corresponding to a frame subsequent to the frame of the current video data used to obtain the prediction data. Therefore, since first processing section does not need to carry out the gray scale transition emphasis process, the first processing section outputs the current video data as it is.

It is to be understood that a combination of the arrangement recited in a certain claim and the arrangement recited in other claim is not limited to a combination of the arrangement recited in the certain claim and the arrangement recited in a claim which is referred to by the certain claim. As long as the object of the present invention can be achieved, it is possible to combine the arrangement recited in the certain claim with the arrangement recited in a claim which is not referred to by the certain claim.

### Advantageous Effects of Invention

As described above, in a stereoscopic video image display method according to the present invention, in a case where switching between a right-eye image and a left-eye image, both of which accommodate a parallax allowing an observer to visually recognize a stereoscopic video image, is done once every frame set, a gray scale transition emphasis process is carried out in each of frames making up the frame set, and the gray scale transition emphasis process is carried out so that an average luminance of the target pixel during a visual recognition period in which the observer is allowed to visually recognize a stereoscopic video image becomes substantially equal to a target display luminance, which is either the first display luminance or the second display luminance.

This optimizes the intensity of the gray scale transition emphasis process, thus suppressing the occurrence of crosstalk as much as possible. This yields the effect of allowing the observer to visually recognize an excellent stereoscopic video image.

As described above, a stereoscopic video image display device according to the present invention is configured to include: a first processing section; a second processing section; and a frame memory, wherein the first and second processing sections are fed (i) current video data corresponding to a video signal of a current frame of the right-eye image or the left-eye image and (ii) storage data of the frame memory which is refreshed once every frame in accordance with output of the second processing section; in order to cause the luminance provided by the target pixel to reach a target display luminance, which is either the first display luminance, or the second display luminance, the first processing section generates emphasized video data by selectively subjecting the current video data corresponding to each of the constituent frames that make up the frame set to a gray scale transition emphasis process with a different intensity, in accordance with a degree of transition from the storage data to the current video data which corresponds to each of constituent frames; and the second processing section obtains, on a basis of the storage data and the current video data, prediction data corresponding to a predicted luminance which the luminance provided by the target pixel will reach through the gray scale transition emphasis process, in accordance with an intensity of the gray scale transition emphasis process for each of the constituent frames, and then rewrites the thus obtained prediction data as the storage data into the frame memory.

This yields the effect of facilitating the luminance of the target pixel to more accurately reach the target display luminance through the gray scale transition emphasis process separated in at least two stages.

### Brief Description of Drawings

Fig. 1

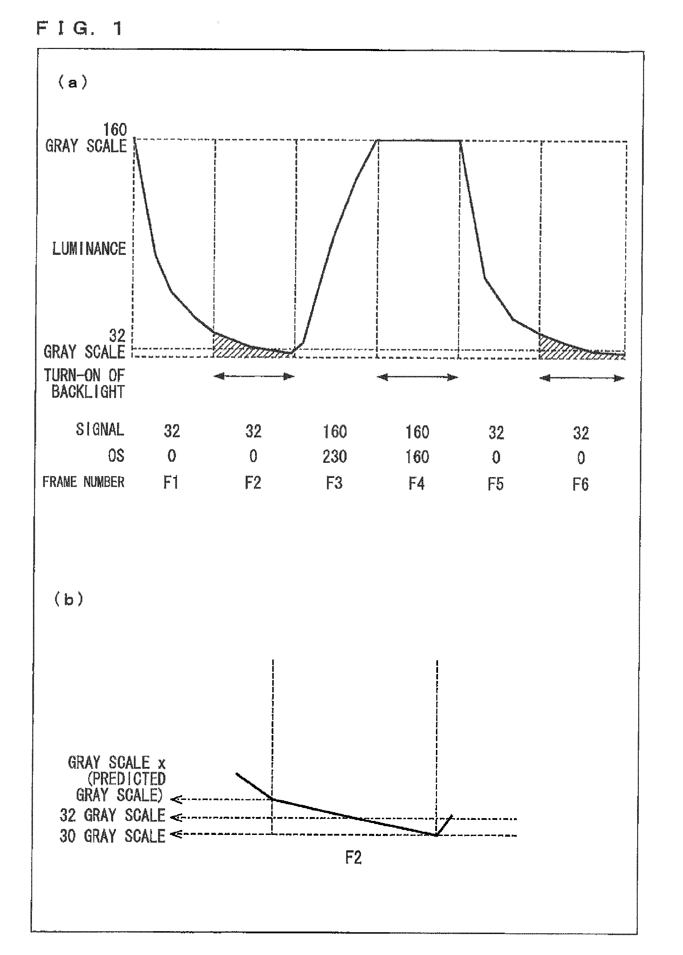

   Fig. 1 is a graph showing a variation in of luminance of a target pixel which belongs to a parallax region in a case where a right-eye image and a left-eye image are displayed in such a manner that switching between the right-eye image and the left-eye image is done once every two frames.
Fig. 2

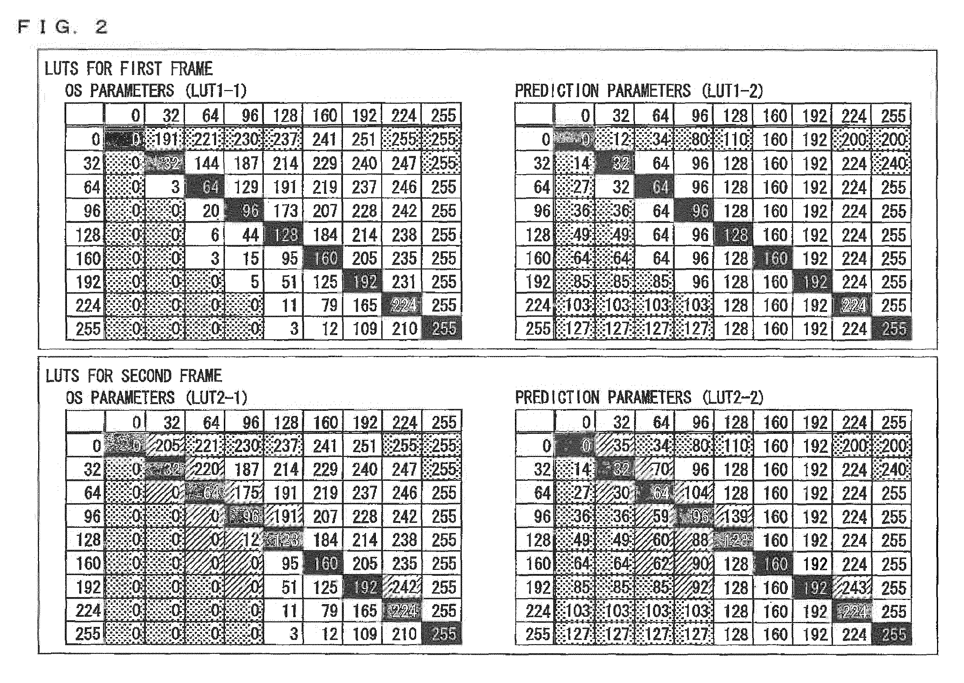

   Fig. 2 is an explanatory view illustrating examples of OS parameters stored in LUTs.
Fig. 3A

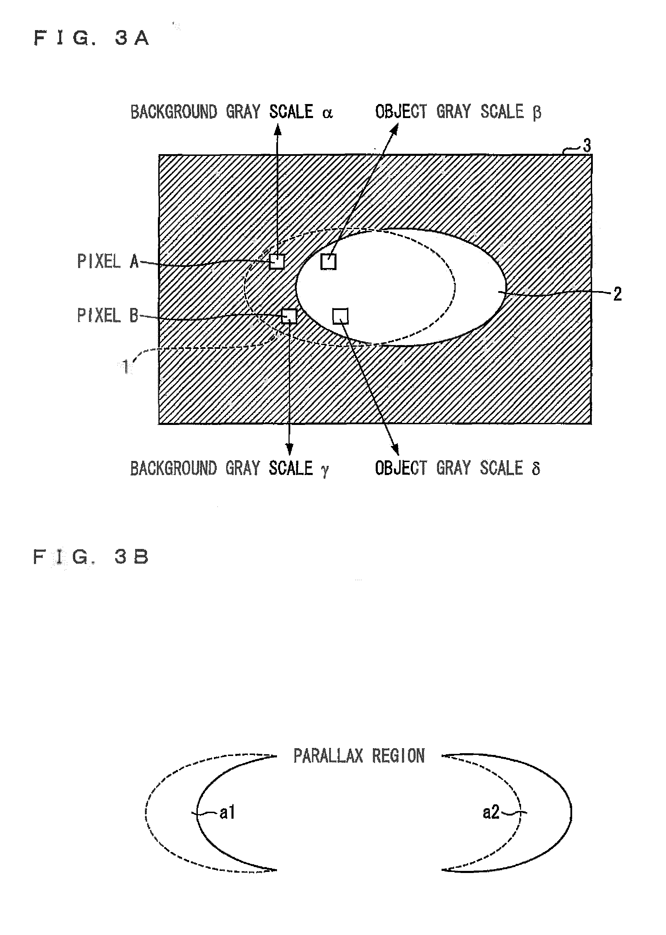

   Fig. 3A is an explanatory view schematically illustrating a state in which the right-eye image and the left-eye image of an Object to be stereoscopically displayed are shown in a background image on an image display surface.
Fig. 3B
   Fig. 3B is an explanatory view illustrating parallax regions extracted from Fig. 3A.
Fig. 4

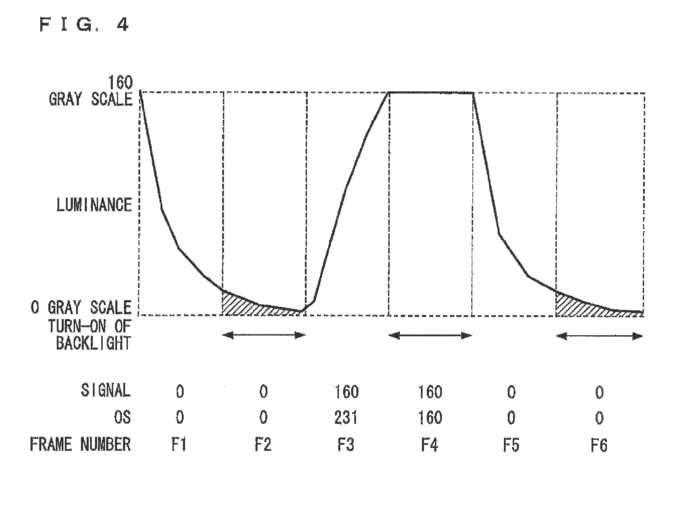

   Fig. 4 is a graph showing a variation in luminance of the target pixel which belongs to the parallax region, under the circumstances where the gray scale transition emphasis process has been carried out using the same LUTs in the first frame coming immediately after the switching and in the second and subsequent frames.
Fig. 5

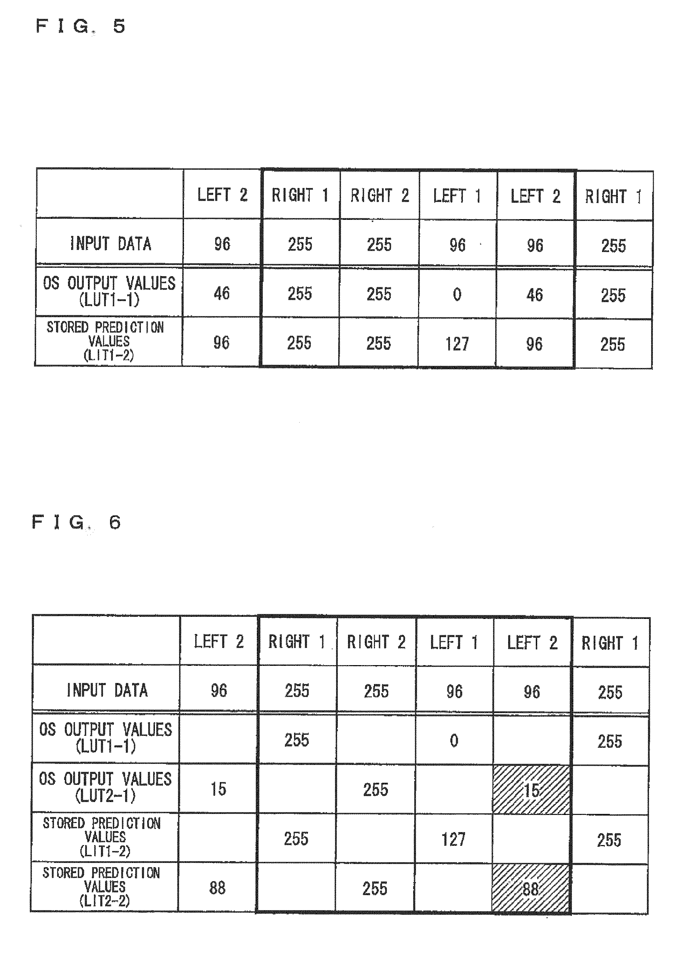

   Fig. 5 is a view illustrating output values of LUTs intended for a gray scale transition emphasis process as Second Comparative Example.
Fig. 6
   Fig. 6 is a view illustrating output values of LUTS intended for the gray scale transition emphasis process according to the present invention at the same gray scale switching as in the Second Comparative Example illustrated in Fig. 5.
Fig. 7

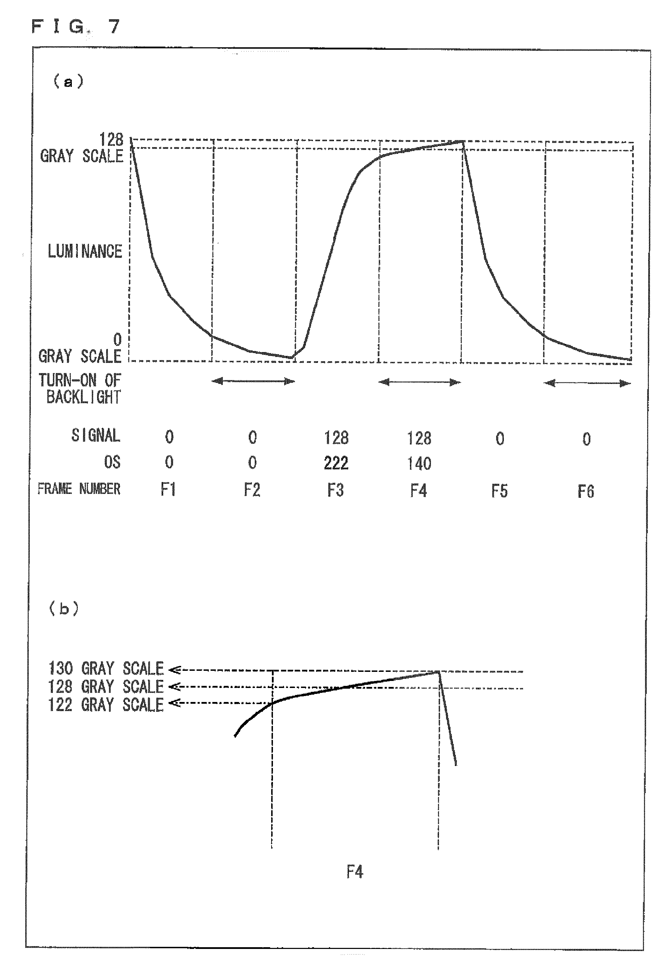

   Fig. 7 is a graph showing a variation in the luminance of the target pixel which belongs to the parallax region, with respect to a gray scale combination different from the combination shown in Fig. 1, in a case where the right-eye image and the left-eye image are displayed in such a manner that switching between the right-eye image and the left-eye image is done once every two frames.
Fig. 8

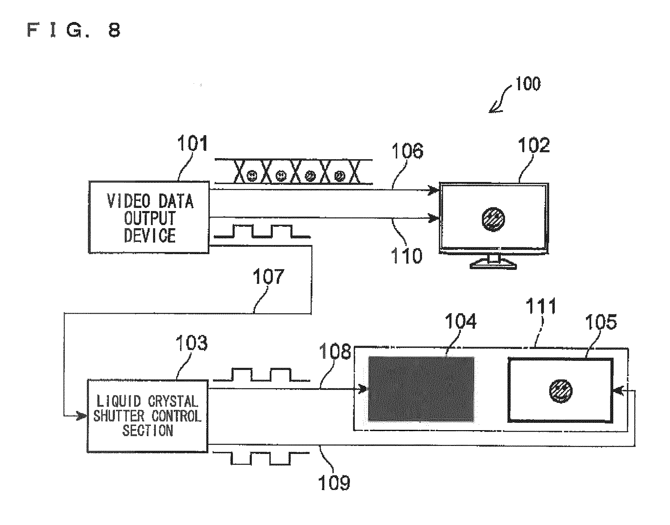

   Fig. 8 is an explanatory diagram schematically showing a configuration example of a display system provided with a stereoscopic video image display device of the present invention.
Fig. 9

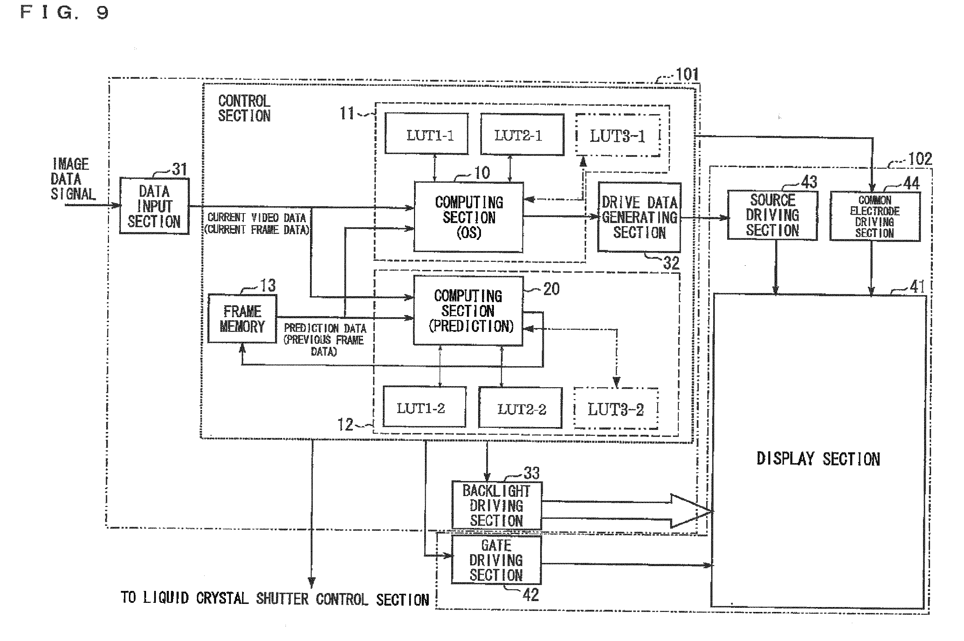

   Fig. 9 is a block diagram showing a specific configuration of a stereoscopic video image display device of the present invention.
Fig. 10
   Fig. 10 is a timing chart for (i) frame data as a video signal for carrying out the conventional stereoscopic video image display and (ii) control signals of a liquid crystal shutter.

### Description of Embodiments

The following will describe details of embodiments of the present invention with reference to drawings. It is to be understood that the following descriptions and illustrations of the drawings are merely examples taken for purpose of explanation of the present invention, and the examples are not intended to limit the scope of the present invention.

### (Examples of Right-eye Image and Left-eye Image)

Fig. 3A is an explanatory view schematically illustrating a state in which a right-eye image 1 and a left-eye image 2 of an object to be stereoscopically displayed are shown in a background image on an image display surface 3. The right-eye image 1 and the left-eye image 2 are displayed so as to accommodate a parallax allowing an observer to visually recognize a stereoscopic video image. For this reason, outlines of the right-eye image 1 and the left-eye image 2 are shown in varying positions that depend upon a parallax.

Note that Fig. 3A illustrates an example of an intersection method by which the right-eye image 1 is displayed on the left side of the left-eye image 2. However, even with an image obtained by a parallel method by which the right-eye image 1 is displayed on the right side of the left-eye image 2, the same effect can be achieved.

The right-eye image 1 and the left-eye image 2 are displayed in such a manner that switching between the right-eye image 1 and the left-eye image 2 is done once every frame set. That is, in a certain grouping of frame set, for example, the same right-eye image 1 is displayed by its constituent frames making up the frame set. In the subsequent grouping of frame set, the same left-eye image 2 is displayed by its constituent frames. Fig. 3A illustrates a frame where the left-eye image 2 is displayed, and outline of the right-eye image 1 is indicated with a broken line as a virtual line to show a position where the right-eye image 1 is displayed.

In a case where the right-eye image 1 and the left-eye image 2 both of which accommodate a parallax are displayed on the image display surface 3, the outlines of the right-eye image 1 and the left-eye image 2 are shown in different positions. It can be therefore assumed that there exists parallax regions surrounded by the outlines of the right-eye image 1 and the left-eye image 2. Fig. 3B is an explanatory view illustrating the parallax regions extracted from Fig. 3A.

As shown in Figs. 3A and 3B, a parallax region a1 and a parallax region a2 will be considered. The parallax region a1 is surrounded by a left-hand part of the outline of the right-eye image 1 and a left-hand part of the outline of the left-eye image 2. The parallax region a2 is surrounded by a right-hand part of the outline of the right-eye image 1 and a right-hand part of the outline of the left-eye image 2.

These parallax regions a1 and a2 can be visually recognized at the occurrence of crosstalk between the right-eye image 1 and the left-eye image 2, but they cannot be visually recognized when no crosstalk occurs. More specifically, when the crosstalk occurs during a display period for the left-eye image 2, the left-hand parallax region a1 that is just on the left side of the left-eye image 2 is visually recognized, for example. That is, the parallax region a1 visually recognized should not appear during the display period for the left-eye image 2 and corresponds to the left-hand part of the outline of the right-eye image 1. When no crosstalk occurs, a background image that should be visually recognized appears in the parallax region a1

Further, during a display period for the right-eye image 1, the left-hand part of the outline of the right-eye image 1 appears in the parallax region a1.

Therefore, in a proper display state where no crosstalk occurs, luminance provided by a target pixel A which belongs to the parallax region a1 makes transition between a first display luminance for displaying the right-eye image 1 and a second display luminance for displaying the background image.

The following will describe a case where luminance having a continuous value in a form of an analogue value is converted into a gray scale having a discrete value in a form of a digital value. In this case, a gray scale of the target pixel A makes transition between (i) an object gray scale β corresponding to the first display luminance for displaying the right-eye image 1 and (ii) a background gray scale α corresponding to the second display luminance for displaying the background image.

Similarly, a gray scale of another target pixel B which belongs to the parallax region a1 makes transition between (i) an object gray scale δ corresponding to the first display luminance for displaying the right-eye image 1 and (ii) a background gray scale γ corresponding to the second display luminance for displaying the background image.

Note that the background gray scale α and the background gray scale γ may be equal to each other, and the gray scale of the background image may be uniform in the whole image display surface 3. However, the present invention does not necessarily require a uniform gray scale of the background image. That is, the background gray scale α and the background gray scale γ may be at any levels of gray scale.

Further, the object gray scale β and the object gray scale δ may be equal to each other, and the gray scale of the whole image of the object to be stereoscopically displayed may be uniform. However, the present invention does not necessarily require a uniform gray scale of the whole image of the object to be stereoscopically displayed. That is, the object gray scale β and the object gray scale δ may be at any levels of gray scale.

Still further, the right-eye image 1 and the left-eye image 2 may be a still image or a moving image. Briefly speaking, the present invention is applicable as long as the background gray scale α and the object gray scale β between which the luminance of the target pixel A makes transition are determined, and the background gray scale γ and the object gray scale δ between which the luminance of the target pixel B makes transition are determined.

Thus, a target display luminance for the target pixel A (or B) which belongs to the left-hand parallax region a1, when switching from the left-eye image 2 to the right-eye image 1 takes place for display of the right-eye image 1, is the object gray scale β (or δ) for displaying the object to be stereoscopically displayed as the right-eye image 1. On the other hand, when switching from the right-eye image 1 to the left-eye image 2 takes place for display of the left-eye image 2, a target display luminance is the background gray scale α (or γ) for displaying the background image.

### (Summary of Gray Scale Transition Emphasis Process)

Therefore, in order to suppress the occurrence of crosstalk, it is important that luminance provided by the target pixels which belong to the parallax regions are caused to reach the target display luminances at least during visual recognition periods in which the observer is allowed to visually recognize the stereoscopic video image.

For example, in a case where the pixels are prepared from liquid crystal, an effective solution to the above-described crosstalk is a gray scale transition emphasis process (so-called overshoot driving) by which a response speed of liquid crystal is increased. This is because the crosstalk results from the characteristics of liquid crystal that a response speed is slow upon application of a signal.

However, when an intensity of the gray scale transition emphasis process is too strong, the luminance of the target pixel goes beyond the target display luminance. That is, in the case of a rising response that causes increase in luminance of the target pixel, if the intensity of the gray scale transition emphasis process is too strong, the luminance of the target pixel exceeds the target display luminance. On the other hand, in the case of a decay response that causes decrease in luminance of the target pixel, if the intensity of the gray scale transition emphasis process is too strong, the luminance of the target pixel falls below the target display luminance. Also in this case, there occurs the crosstalk which causes the parallax region to be visually recognized.

In view of this, in the present invention, the gray scale transition emphasis process is carried out so that an average luminance of the target pixel during the visual recognition period becomes substantially equal to the target display luminance.

Fig. 1 illustrates a concrete example of the gray scale transition emphasis process carried out in the present invention. Fig. 1 is a graph showing a variation in the luminance (gray scale) of the target pixel A which belongs to the parallax region a1, for example, in a case where the right-eye image 1 and the left-eye image 2 are displayed in such a manner that switching between the right-eye image 1 and the left-eye image 2 is done once every two frames.

As shown in (a) of Fig. 1, frames F1 and F2 are, for example, a display period for the left-eye image 2, during which a gray scale of the target pixel A is changed from an object gray scale β of 160 for displaying the right-eye image 1 to a background gray scale α of 32 for displaying the background image, in accordance with a video signal.

Meanwhile, frames F3 and F4 are, for example, a display period for the right-eye image 1, during which a gray scale of the target pixel A is changed from the background gray scale α of 32 for displaying the background image to the object gray scale β of 160 for displaying the right-eye image 1, in accordance with a video signal.

Note that, for example, the frames F1 and F2 are constituent frames making up a frame set (two frames) to display the left-eye image 2, and the frames F3 and F4 are constituent frames making up a frame set (two frames) to display the right-eye image 1.

Further, in frames F5 and F6, the same gray scale switching as in the frames F1 and F2 is repeated. However, it is not necessary that a level of gray scale in the frames F5 and F6 is the same as the level of gray scale in the frames F1 and F2.

As shown in (a) of Fig. 1, when the gray scale of the target pixel A is to be switched from 160 to 32, in the frame F1 coming immediately after the switching, a drive signal corresponding to 32 gray scale is not given to the target pixel A, but a drive signal (OS) corresponding to 0 gray scale is given to the target pixel A by carrying out a first gray scale transition emphasis process.

Next, in a frame other than the frame that comes immediately after the switching, i.e. in the frame F2 in the example shown in (a) of Fig. 1, a subsequent gray scale transition emphasis process is carried out so that a gray scale corresponding to an average luminance of the target pixel A during a period from the beginning of the frame F2 to a subsequent switching is substantially equal to 32 gray scale corresponding to a target display luminance. As a result, as shown in (b) of Fig. 1, at the beginning of the frame F2, a gray scale of the target pixel A does not reach the target gray scale, i.e. 32 gray scale, while at the end of the frame F2, i.e. at a point in time of the subsequent switching, the gray scale of the target pixel A reaches a gray scale level (e.g. 30 gray scale) which is lower than the target gray scale, i.e. 32 gray scale.

In this manner, the gray scales at the beginning of the frame F2 and at the end of the frame F2 have values between which the target gray scale value is sandwiched. This makes it possible to make the average luminance of the frame F2 substantially equal to the target gray scale. The gray scale at the beginning of the frame F2 and the gray scale at the end of the frame F2 can be translated into "the gray scale at the beginning of the visual recognition period (described later), and the gray scale at the end of the visual recognition period", and can be further translated into "the gray scale at the beginning of the frame other than the first frame that comes immediately after the switching and the gray scale at the point in time of the subsequent switching".

Difference between the first gray scale transition emphasis process and the subsequent gray scale transition emphasis process will be detailed later.

### (Visual Recognition Period)

Here, the visual recognition period will be described. In order to offer the observer high-quality stereoscopic display of the object to be stereoscopically displayed by using the right-eye image 1 and the left-eye image 2, the right-eye image 1 and the left-eye image 2 need to be perceived by the observer in such a state that the right-eye image 1 and the left-eye image 2 are completely separated from each other.

Separation between the right-eye image 1 and the left-eye image 2 can be achieved by the following two modes. One is a mode of requiring the observer to wear the shutter glasses, and another is a mode of providing a parallax barrier on the image display surface 3 without using the shutter glasses. The present embodiment will be described about the mode of using the shutter glasses, although such a mode is not intended to limit the present invention.

As shown in (a) of Fig. 1, in the frames F1, F3, and F5 where gray scale significantly varies with gray scale switching, great crosstalk occurs in the parallax regions a1 and a2. For this reason, the frames F1, F3, and F5 where there occur significant variations in gray scale are not suitable for the visual recognition periods. Therefore, the frames F2, F4, and F6 where the gray scale level corresponding to the average luminance is substantially equal to the target gray scale level are set as the visual recognition periods.

In order to set the frames F2, F4, and F6 as the visual recognition periods, the shutter glasses may be controlled in the following manner. That is, in the frame F2, the shutter glasses are opened and closed such that a left eye's view is openly presented while a right eye's view is blocked. In the frame F4, the shutter glasses are opened and closed such that the right eye's view is openly presented while the left eye's view is blocked. In the frame F6, the shutter glasses are opened and closed such that the left eye's view is openly presented while the right eye's view is blocked. In the frames F1, F3, and F5, the shutter glasses are closed such that both the right eye's view and the left eye's view are blocked.

Achievement of the above-described operations, however, require the shutter glasses to open and close at a fast response speed. For example, PLZT (lead lanthanum zirconate titanate) is suitable for use in a high-speed optical shutter. However, liquid crystal, which is more commonly used for the optical shutter, is not suitable for use in a fast responsive opening and closing on a frame-by-frame basis.

In view of this, the present embodiment adopts a combined use of the shutter glasses and on-off operations of a backlight that emits light to the back side of the image display surface 3. The backlight is switched between an on-state and an off-state on a frame-by-frame basis. Further, the backlight can be switched between an on-state and an off-state with respect to a given pixel in the image display surface 3 or with respect to a given pixel which provides the right-eye image 1 and the left-eye image 2 of the object to be stereoscopically displayed. More specifically, as shown in (a) of Fig. 1, the backlight is turned on in the frames F2, F4, and F6, which are the visual recognition periods, while the backlight is turned off in the frames F1, F3, and F5, which are not the visual recognition periods.

Note that the expression "the backlight can be switched between an on-state and an off-state with respect to a given pixel" may be translated into the expression "the backlight can be switched between an on-state and an off-state in accordance with a timing for gray scale switching in a given pixel.

On the other hand, the shutter glasses are operated so that the right-eye shutter is opened and the left-eye shutter is closed during the display periods (frames F3 and F4) for the right-eye image 1, while the right-eye shutter is closed and the left-eye shutter is opened during the display periods (frames F1 and F2 or frames F5 and F6) for the left-eye image 2.

Thus, it is possible to provide an excellent visual recognition period by combination of the opening and closing of the shutter glasses and the on-off operations of the backlight.

Further, an image of each frame is scanned from one end to another end of a screen over each frame period. Therefore, when the shutter is opened with the backlight turned on all the time during the frame period, the left-eye image and the right-eye image unfortunately appear simultaneously in the upper and lower parts of the screen, respectively. More specifically, separate images before and after the frame refreshing are displayed in the upper and lower parts of the screen, respectively. Therefore, when the right-eye image is displayed in the upper part of the screen, the left-eye image of the previous frame unfortunately appears in the lower part of the screen. On the other hand, when the left-eye image is displayed in the upper part of the screen, the right-eye image of the previous frame unfortunately appears in the lower part of the screen. Thus, it is desirable that off-operation of the backlight be scanned in synchronization with scanning of the screen (scanning of pixels in one line or multiple lines). Scanning the backlight in this manner makes it possible to set the on-time of the backlight substantially longer.

That is, in the method where scanning of the backlight is not carried out, the backlight can be turned on only in a part of one frame period. However, in the method where scanning of the backlight is carried out, the backlight can be sequentially turned on during full one frame period from its beginning to its end.

Note that with regard to the aforementioned "subsequent gray scale transition emphasis process", the expression "the subsequent gray scale transition emphasis process is carried out so that the average luminance of the target pixel during the period from the beginning of a frame other than the first frame coming immediately after a switching to the subsequent switching becomes substantially equal to the target display luminance" can be translated into the expression "the subsequent gray scale transition emphasis process is carried out so that the average luminance of the target pixel during the visual recognition period becomes substantially equal to the target display luminance,".

### (Details of the Gray Scale Transition Emphasis Process)

### (1) Lookup table for OS parameters

The gray scale transition emphasis process generally requires preparation of lookup tables (LUTs) where overshoot (OS) parameters associated with input gray scale (longitudinal axis) and output gray scale (lateral axis) are stored. Alternatively, every time the gray scale transition emphasis process is carried out, the OS parameters may be found in real time by equations that have been prepared to vary with combinations of input gray scale and output gray scale. However, the use of the LUTs enables further lightening the load on the control section and further enhancing in speed of the process.

Fig. 2 is an explanatory view illustrating examples of the OS parameters stored in the LUTs. In the present embodiment, the right-eye image 1 and the left-eye image 2 are displayed in such a manner that switching between them is done once every two frames, as mentioned previously. Therefore, separate LUTs intended for the individual gray scale transition emphasis processes required by the respective two frames are prepared in the forms of LUT1-1 and LUT2-1.

Alternatively, the right-eye image 1 and the left-eye image 2 may be displayed in such a manner that switching between them is done once every three frames, so that a period until a target gray scale is reached gets longer. In this case, it is preferable that three LUTs be prepared respectively corresponding to these three frames.

### (2) Difference between the LUT1-1 and the LUT2-1

Between the LUT1-1 and the LUT2-1, some of the OS parameters stored vary depending upon combinations of the input gray scale and output gray scale.

This is because the first gray scale transition emphasis process carried out in the first frame that comes immediately after the switching between the right-eye image 1 and the left-eye image 2 is partially varied in emphasis level from the subsequent gray scale transition emphasis process carried out in the subsequent frame.

In Fig. 2, dotted regions and diagonally shaded regions are illustrated to identify different OS parameters. For example, an OS parameter corresponding to a combination of input gray scale of 0 and output gray scale of 32 takes 191 in the LUT1-1, but 205 in the LUT2-1. Further, an OS parameter corresponding to a combination of input gray scale of 160 and output gray scale of 96 takes 15 in the LUT1-1, but 0 in the LUT2-1. In this manner, the LUT2-1 stores an OS parameter that would provide a stronger intensity of a gray scale transition emphasis process, in accordance with a combination of the input gray scale and output gray scale.

This is done, as described previously with reference to Fig. 1, for the purpose of causing the gray scales at the beginning of the frame F2 and at the end of the frame F2, for example, to have values between which the target gray scale value is sandwiched, so that the average luminance of the frame F2 becomes substantially equal to the target gray scale.

For the first gray scale transition emphasis process, a degree of emphasis thereof is set with an aim of causing a gray scale of the target pixel to reach a target gray scale at the end of the first frame. For the subsequent gray scale transition emphasis process, a degree of emphasis thereof is set with an aim of causing a gray scale of the target pixel to go beyond the target gray scale at the end of the subsequent frame. This results in difference in emphasis level between the first gray scale transition emphasis process and the subsequent gray scale transition emphasis process.

In short, the LUT2-1 prepared for the subsequent gray scale transition emphasis process include OS parameters by which the luminance (gray scale) of the target pixel is caused to reach a third display luminance (gray scale) that goes beyond the target display luminance (gray scale), depending upon a degree of transition in gray scale.

### (3) Lookup table for prediction parameters

As mentioned previously, the present invention aims "to cause the average luminance of the target pixel during the period from the beginning of a frame other than the first frame coming immediately after a switching to the subsequent switching to become substantially equal to the target display gray scale" or "to cause the average luminance of the target pixel during the visual recognition period to become substantially equal to the target display gray scale".

A key to accomplishing this aim is to appropriately set emphasis levels of the first gray scale transition emphasis process and the subsequent gray scale transition emphasis process. More specifically, in order to enhance accuracies of the gray scale transition emphasis processes, LUTs storing prediction parameters therein are additionally prepared in the forms of LUT1-2 and LUT2-2.

LUT1-2 stores therein, as prediction parameters (third parameters) corresponding to combinations of input gray scales and output gray scales, gray scales which the input gray scales are predicted to actually reach at the end of the first frame under the circumstances where the gray scale transition emphasis process using the OS parameters (first parameters) stored in the LUT1-1 has been carried out in the first frame. These prediction parameters can be determined in advance by actual measurement.

Further, the LUT2-2 stores therein, as prediction parameters (fourth parameters) corresponding to combinations of input gray scales and output gray scales, gray scales which the input gray scales are predicted to actually reach at the end of the subsequent frame under the circumstances where the gray scale transition emphasis process using the OS parameters (second parameters) stored in the LUT2-1 has been carried out in the subsequent frame. These prediction parameters can also be determined in advance by actual measurement.

The first prediction parameter obtained from the LUT1-2 is set as an input gray scale for the subsequent gray scale transition emphasis process using the OS parameters stored in the LUT2-1. Further, the subsequent prediction parameter obtained from the LUT2-2 is set as an input gray scale for the first gray scale transition emphasis process to be carried out, using the OS parameters stored in the LUT1-1, in another first frame that comes immediately after the switching between the right-eye image 1 and the left-eye image 2.

### (Gray Scale Transition Emphasis Process as First Comparative Example)

For ease of understanding the effect of the gray scale transition emphasis process in the present invention, which will be described later, the following will specifically describe a gray scale transition emphasis process as a first comparative example.

Fig. 4 is a graph showing a variation in luminance (gray scale) of the target pixel A which belongs to the parallax region a1, under the circumstances where the gray scale transition emphasis process has been carried out using only the lookup tables LUT1-1 and LUT1-2, without preparation of additional LUTs, in the first frame coming immediately after the switching and in the second and subsequent frames.

First, in a frame F1 shown in Fig. 4, a gray scale is changed from 160 to 0. In the frame F1, the first gray scale transition emphasis process using the OS parameters stored in the LUT1-1 is carried out. More specifically, the OS parameter corresponding to the combination of 160 input gray scale and 0 output gray scale is 0, which is found from the LUT1-1. Accordingly, a drive signal corresponding to 0 gray scale is supplied to the target pixel A. However, in a case where the OS parameter for obtaining the output gray scale of 0 is 0, it means that the gray scale transition emphasis process is not carried out. This is unavoidable because there exists no gray scale below 0 output gray scale.

On the other hand, the prediction parameter corresponding to the same combination of 160 input gray scale and 0 output gray scale is 64, which is found from LUT1-2. That is, when a drive signal corresponding to 0 gray scale is supplied to the target pixel A providing 160 gray scale, it is predicted that the gray scale of the target pixel A fails to reach 0 gray scale and reaches 64 gray scale at the end of the frame F1.

In view of this, in the subsequent gray scale transition emphasis process to be carried out in the subsequent frame F2, an OS parameter corresponding to the combination of 64 input gray scale and 0 output gray scale is obtained again using LUT1-1. More specifically, the OS parameter corresponding to the combination of 64 input gray scale and 0 output gray scale is 0, which is found from LUT1-1. Accordingly, a drive signal corresponding to 0 gray scale is continuously supplied to the target pixel A.

However, referring to the LUT1-2, a prediction parameter corresponding to the combination of 64 input gray scale and 0 output gray scale is 27. Therefore, in Comparative Example 1, the gray scale transition emphasis process cannot be carried out to transition from the input gray scale other than 0 to 0 output gray scale. As a result, the target gray scale of 0 is not reached even at the end of the frame F2.

This causes separation of the parallax region a1 from the black background, and the parallax region a1 is visually recognized in the frame F2 because the parallax region a1 does not change to black. That is, crosstalk significantly occurs, in particular, during a visual recognition period under circumstances where switching from a high gray scale to a low gray scale takes place, which hampers the observer from viewing a stereoscopic image.

Note that with regard to frames F3 and F4, a theory about operations in the frames F3 and F4 is the same as that in Concrete Example 2, and explanations thereof will be omitted.

### (Gray Scale Transition Emphasis Process as Second Comparative Example)

Fig. 5 is a view illustrating output values of LUTs intended for a tone transition emphasis process as Second Comparative Example.

In Fig. 5, four frames indicating "RIGHT 1", "RIGHT 2", "LEFT 1" and "LEFT 2" will be focused on. In these four frames, a gray scale of the target pixel A is changed between 255 and 96. In the frame "RIGHT 1", the gray scale is changed from 96 to 255. In this case, the OS parameter changes to 255, which is found from LUT1-1, and the prediction parameter changes to 255, which is found from LUT1-2.

In the frame "RIGHT 2" which is the visual recognition period, the target pixel A maintains its gray scale at 255. In this case, both the OS parameter and the prediction parameter remain unchanged at 255, which is found from the LUT1-1 and the LUT1-2.

In the frame "LEFT 1", the gray scale is changed from 255 to 96. In this case, the OS parameter changes to 0, which is found from the LUT1-1, and the prediction parameter changes to 127, which is found from the LUT1-2. That is, it is predicted that gray scale of the target pixel A does not reach 96 but reaches 127 at the end of the frame "LEFT 1".

In the frame "LEFT 2" which is the visual recognition period, since it is predicted that a gray scale is 127 at the beginning of the frame "LEFT 2", the OS parameter corresponding to 127 input gray scale and 96 output gray scale is found by interpolation operation from the LUT1-1. In this case, the OS parameter is found to be 46 by the following equation: (96 - 44) x (128 - 127)/(128 - 96) + 44 = 45.63 ≈ 46. The prediction parameter corresponding to the combination of 127 input gray scale and 96 output gray scale is found to be 96 from the LUT1-2. The prediction parameter "96" means that the gray scale of the target pixel A reaches 96 at the end of the frame "LEFT 2" through the gray scale transition emphasis process using the OS parameter 46.

Thus, the gray scale of the target pixel A during the period from the beginning of the frame "LEFT 2" until the end of the frame "LEFT 2" is greater than 96. Since the gray scale of the target pixel A is greater than 96 background gray scale in the frame "LEFT 2", the parallax region is separated from the background and is visually recognized.

Assume that other OS parameter having a higher emphasis level in the LUT1-1 is used in the first frame for another pixel that makes gray scale transition from 127 gray scale to 96 gray scale in the first frame, for example. This increases the risk that the gray scale of the another pixel will go beyond the target luminance. Also in this case, the parallax region and the background are visually recognized independently.

That is, in a case where switching between the right-eye image and the left-eye image is done once every frame set, it is found difficult to suppress the occurrence of crosstalk by using the same LUTs in the frames making up the frame set.

### (Concrete Example 1 of Gray Scale Transition Emphasis Processes Varying Stepwise in Emphasis Level)

Next, the following will describe the first gray scale transition emphasis process and the subsequent gray scale transition emphasis process according to the present invention, giving a concrete example.

In the Example shown in (a) of Fig. 1, a predetermined gray scale other than 0 gray scale is set as a minimum gray scale common to (i) the object gray scale β as the first display luminance for displaying the object to be stereoscopically displayed and (ii) the background gray scale α as the second display luminance for display the background image. That is, the object gray scale β is 160, the background gray scale α is 32, and the minimum gray scale is 32 gray scale.

In this manner, setting the minimum gray scale to a predetermined gray scale other than 0 gray scale enables the gray scale transition emphasis process for accelerating reaching the minimum gray scale. This makes it possible to solve the problem as described in the First Comparative Example, i.e. the problem that crosstalk occurs due to the impossibility of the gray scale transition emphasis process at the transition from the input gray scale other than 0 gray scale to 0 output gray scale.

The evidence that 32 gray scale is the minimum gray scale can be explained with reference to the LUT1-2 and the LUT2-2. More specifically, assuming that the minimum gray scale is 0, a predicted gray scale which the gray scale of the target pixel will reach is greater than 0 both in the LUT1-2 and the LUT2-2. That is, crosstalk always occurs at the transition from the gray scale other than 0 to 0. Therefore, 32 is selected as the minimum gray scale because 32 is the secondly lower gray scale following 0 among values set both in the LUT1-2 and the LUT2-2. As a matter of course, the minimum gray scale is not limited to 32. Alternatively, the minimum gray scale can be set to any predetermined gray scale other than 0 gray scale as long as the gray scale transition emphasis process can be carried out at such a predetermined gray scale.

Setting the minimum gray scale to the predetermined gray scale other than 0 gray scale means that the background image is shown with a color of slightly greyish black, rather than black. However, setting the minimum gray scale to the predetermined gray scale other than 0 gray scale enables reduction of the occurrence of crosstalk which is more obtrusive in blackish display than in whitish display. This produces a great effect of enhancing display quality of the stereoscopic video image. This will be more specifically described below.

In the frame F1 the gray scale is changed from 160 to 32, as described above. With respect to the frame 1, the first gray scale transition emphasis process using the OS parameters stored in the LUT1-1 is carried out. In the LUT1-1 of Fig. 2, "0" is the OS parameter corresponding to the combination of 160 input gray scale and 32 output gray scale. Therefore, a drive signal corresponding to 0 gray scale is supplied to the target pixel A.

On the other hand, in the LUT1-2. "64" is the prediction parameter corresponding to the combination of 160 gray scale as input gray scale and 32 gray scale as output gray scale. That is, the gray scale of the target pixel A is predicted to reach 64 gray scale at the end of the frame F1.

Then, in the subsequent gray scale transition emphasis process to be carried out in the subsequent frame F2, the OS parameter corresponding to the combination of 64 gray scale as input gray scale and 32 gray scale as output gray scale is read from the LUT2-1. That is, in the LUT2-1, "0" is the OS parameter corresponding to the combination of 64 gray scale as input gray scale and 32 gray scale as output gray scale. Therefore, a drive signal corresponding to 0 gray scale is continuously supplied to the target pixel A.

Referring to the LUT2-2, the prediction parameter corresponding to the combination of 64 gray scale as input gray scale and 32 gray scale as output gray scale is 30 gray scale, which is lower than 32 gray scale as the target gray scale. In this manner, a gray scale x (prediction gray scale) at the beginning of the frame F2 is 64, and the gray scale at the end of the frame F2 is 30, as shown in (b) of Fig. 1. This allows the average gray scale in the frame f2 (visual recognition period) to be 32 as the target gray scale.

Consequently, the average gray scale in the frame F2 (visual recognition period) becomes equal to the background gray scale. This practically eliminates the observer to visually recognize the crosstalk.

Note that by setting the minimum gray scale to the predetermined gray scale other than 0 gray scale, it is possible to obtain the effect of reliably preventing the occurrence of crosstalk in dark gray scale. However, setting of the minimum gray scale to 0 causes crosstalk at the gray scale transition of the target pixel A from a gray scale other than 0 to 0, but prevents the occurrence of crosstalk at the gray scale transition of the target pixel A from a high gray scale other than 0 gray scale to a low gray scale other than 0 gray scale, i.e. at the gray scale transition in an intermediate gray scale range. In view of this, the present invention is not limited to the mode in which the minimum gray scale is set to the predetermined gray scale other than 0 gray scale.

### (Concrete Example 2 of Gray Scale Transition Emphasis Processes Varying Stepwise in Emphasis Level)

Next, a start gray scale of the frame F3 that comes immediately after the switching from the left-eye image 2 to the right-eye image 1 is 30 gray scale which is a gray scale at the end of the frame F2. Therefore, by using the LUT1-1, an OS parameter corresponding to a combination of 30 gray scale as input grayscale and 160 gray scale as output grayscale for the first gray scale transition emphasis process to be carried out in the frame F3 is found to be 230 by interpolation operation.

On the other hand, in the LUT1-2, the prediction parameter corresponding to the same combination of 30 gray scale as input gray scale and 160 gray scale as output gray scale is found to be 160 by interpolation operation. That is, in the case of the combination of 30 gray scale as input grayscale and 160 gray scale as output grayscale, the gray scale of the target pixel A becomes 160 as the target gray scale only by the first gray scale transition emphasis process using the OS parameter of 230.

In this case, in the subsequent frame F4, it is not necessary to carry out the subsequent gray scale transition emphasis process. In fact, in the LUT2-1 for the subsequent frame F4, "160" is stored as the OS parameter corresponding to the combination of 160 gray scale as input gray scale and 160 gray scale as output gray scale, and the OS parameter is set so that unnecessary gray scale transition emphasis process is not carried out.

Also in the LUT2-2, "160" is the prediction parameter corresponding to the combination of 160 gray scale as input gray scale and 160 gray scale as output grayscale. Thus, as shown in (b) of Fig. 1, the gray scale of the frame F₄ is maintained at 160. Therefore, it is needless to say that the average gray scale of the frame F4 (visual recognition period) becomes 160 gray scale as the target gray scale.

In the frames following the frame F5, the processes in the frames F1 through F4 are repeated.

Note that the example shown in Fig. 1 applies to the case where the object to be stereoscopically displayed is shown as a still image on the image display surface 3. In a case where an object in motion to be stereoscopically displayed is shown on the image display surface 3, the right-eye image 1 or the left-eye image 2 is moved during the periods (frames F1, F3, and F5) other than the visual recognition periods. Gray scale transition of the target pixel A occurs between the object gray scale β and a new background gray scale α' corresponding to a parallax region a1 formed in a new display location after the movement of the object to be stereoscopically displayed.

### (Concrete Example 3 of Gray Scale Transition Emphasis Processes Varying Stepwise in Emphasis Level)

Fig. 6 is a view illustrating output values of the LUTs in the gray scale transition emphasis process according to the present invention at the same gray scale switching as in the Second Comparative Example illustrated in Fig. 5.

First, a start gray scale of the frame "RIGHT 1" is equal to a prediction parameter "88", which is found from the LUT2-2, of the frame "LEFT 2" previous to the frame "RIGHT 1".

Therefore, in the frame "RIGHT 1", the gray scale of the target pixel A is changed from 88 to 255. In this case, the OS parameter is found to be "255" by interpolation operation from the LUT1-1. The prediction parameter is found to be "255" from the LUT1-2.

In the frame "RIGHT 2" which is the visual recognition period, the target pixel A maintains its gray scale at 255. Therefore, the present Example is the same as the Second Comparative Example in that both the OS parameter and the prediction parameter remain unchanged at 255, which is found from the LUT1-1 and the LUT1-2.

In the subsequent frame "LEFT 1", the gray scale is changed from 255 to 96. In this case, the OS parameter is found to be "0" from the LUT1-1, and the prediction parameter is found to be "127" from the LUT1-2. That is, the present Example is also the same as the Second Comparative Example in that the gray scale of the target pixel A is predicted to reach 127 without reaching 96 at the end of the frame "LEFT 1".

In the frame "LEFT 2" which is the visual recognition period, the gray scale at the beginning of the frame "LEFT 2" is predicted to be 127. The OS parameter corresponding to the combination of 127 gray scale as input gray scale and 0 gray scale as output gray scale is found to be "15" by interpolation operation from the LUT2-1. The prediction parameter is found to be "88" by interpolation operation from the LUT2-2. The prediction parameter "88" means that the gray scale of the target pixel A reaches 88 at the end of the frame "LETT 2" through the gray scale transition emphasis process using the OS parameter "15".

In the Second Comparative Example, the crosstalk occurs in the frame "LEFT 2". However, by virtue of the adoption of the present invention, a gray scale at the beginning of the frame "LEFT 2" becomes 127, and a gray scale at the end of the frame "LEFT 2" becomes 88. This makes it possible to make the average gray scale reach 96 gray scale which is equal to the background gray scale. As a result, no crosstalk occurs in the frame "LEFT 2".

### (Schematic Configuration of Stereoscopic Video Image Display Device)

The following will describe a stereoscopic video image display device that carries out the above-described stereoscopic video image display method according to the present invention.

Fig. 8 is an explanatory diagram schematically showing a configuration example of a display system 100 provided with a stereoscopic video image display device of the present invention.

More specifically, as shown in Fig. 8, the display system 100 is provided with a stereoscopic video image display device that includes a video data output device 101 and a liquid crystal display 102, and the display system 100 also has a liquid crystal shutter control section 103 and a shutter eyeglasses 111. The shutter glasses 111 has a liquid crystal shutter L (left-eye shutter) 104 and a liquid crystal shutter R (right-eye shutter) 105.

Note that for the sake of convenience the video data output device 101 is shown in Fig. 8 as an entity separated from the liquid crystal display 102. However, the video data output device 101 may be replaced by a portable liquid crystal display device into which the video data output device 101 and the liquid crystal display 102 are integrated.

The video data output device 101 generates drive data 106 from frame data of a video image to be displayed on the liquid crystal display 102, and then outputs the drive data 106 to the liquid crystal display 102. In the present embodiment, the video data output device 101, as already has been described with reference to (a) of Fig. 1 and others, alternately transmits drive data for left-eye video image and drive data for right-eye video image by their respective two frames.

To prevent the occurrence of flickers of a video image displayed on the liquid crystal display 102, the drive data for right-eye video image and the drive data for left-eye video image have each a frame rate of not less than 60 frames per second and more preferably not less than 120 frames per second.

Simultaneously, the video data output device 101 outputs a frame control signal 107 for informing status of a frame (frame number). In addition, the video data output device 101 transmits to the liquid crystal display 102 a backlight control signal 110 for controlling illumination of a backlight for the liquid crystal display 102.

The liquid crystal display 102 is a device that outputs, in the form of a video image, the drive data 106 outputted from the video data output device 101.

The liquid crystal shutter control section 103 controls openings and closings of the liquid crystal shutter L 104 and the liquid crystal shutter R 105 by a liquid crystal shutter L control signal 108 and a liquid crystal shutter R control signal 109, respectively. Fig. 8 indicates the liquid crystal shutter R 105 in an opened state and the liquid crystal shutter L 104 in a closed state.

In the opened state, the liquid crystal shutter L 104 and the liquid crystal shutter R 105 allow the video images shown on the liquid crystal display 102 to be visible to user's eyes corresponding to their respective video images. On the other hand, in the closed state, the liquid crystal shutter L 104 and the liquid crystal shutter R 105 allow the video images to be invisible to the user's eyes corresponding to their respective video images.

### (Specific configuration of the stereoscopic video image display device)

### (1) Essential part of the stereoscopic video image display device

Fig. 9 is a block diagram showing a specific configuration of the stereoscopic image display device of the present invention. As shown in Fig. 9, the video data output device 101 is roughly divided into a first processing section 11, a second processing section 12, and a frame memory 13, which constitutes an essential part of the video data output device 101.

The first processing section 11 and the second processing section 12 are fed (i) current video data corresponding to a video signal of a current frame of the right-eye image 1 or the left-eye image 2 and (ii) storage data of the frame memory 13 which is refreshed once every frame in accordance with output of the second processing section 12.

In order to cause the luminance provided by the target pixel A to reach a target display luminance, which is either the first display luminance (e.g. object gray scale β) for displaying the object to be stereoscopically displayed or the second display luminance (e.g. background gray scale α) for displaying the background image, then first processing section 11 generates emphasized video data by selectively subjecting the current video data corresponding to each of the constituent frames to a gray scale transition emphasis process (OS) with a different intensity, in accordance with a degree of transition from the storage data to the current video data which corresponds to each of the constituent frames. The emphasized video data is outputted from the first processing section 11.

The second processing section 12 obtains, on a basis of the storage data and the current video data, prediction data corresponding to a predicted luminance which the luminance provided by the target pixel A will reach through the gray scale transition emphasis process carried out by the first processing section 11, in accordance with an intensity of the gray scale transition emphasis process for each of the constituent frames, and then rewrites the thus obtained prediction data as the storage data into the frame memory 13.

### (2) Specific configuration of the first processing section 11

The first processing section 11, more specifically, includes the computing section 10, LUT1-1 as a first lookup table, and LUT2-1 as a second look-up table. Note that if a gray scale transition emphasis process using prediction data is further repeated, the first processing section 11 may include LUT3-1 storing additional OS parameters therein. The computing section 10 is fed the storage data from the frame memory 13 and current video data, and then subjects the current video data to a gray scale transition emphasis process if necessary.

The LUT1-1, as mentioned previously with reference to Fig. 6, stores therein the OS parameters (first parameters) intended for a first gray scale transition emphasis process to be carried out for transition from the storage data fed from the frame memory 13 to current video data corresponding to a first frame out of the frame set.

The LUT2-1 stores therein the OS parameters (second parameters) intended for a subsequent gray scale transition emphasis process to be carried out for transition from first prediction data, which the second processing section 12 has obtained as the prediction data in connection with the first gray scale transition emphasis process, to current video data corresponding to a subsequent frame out of the frame set.

### (3) Specific configuration of the second processing section 12

The second processing section 12, more specifically, includes a computing section 20, the LUT1-2 as a third lookup table, and the LUT2-2 as a fourth lookup table. Note that if a gray scale transition emphasis process using prediction data is further repeated, the second processing section 12 may include LUT3-2 storing parameters for obtaining additional prediction data therein.

The computing section 20 is fed the storage data from the frame memory 13 and current video data, and then obtains the prediction data from the incoming current video data and storage data.

The LUT1-2 stores therein third parameters in such a manner that the third parameters are associated with the current video data and the storage data. The third parameters are parameters from which the second processing section 12 obtains the first prediction data regarding the first gray scale transition emphasis process to be carried out by the first processing section 11.

The LUT2-2 stores therein fourth parameters in such a manner that the fourth parameters are associated with the first prediction data and the current video data. The fourth parameters are parameters from which the second processing section 12 obtains second prediction data as the prediction data regarding the subsequent gray scale transition emphasis process to be carried out by the first processing section 11.

### (4) Other constituent elements

The video data output device 101 further includes a data input section 31 on a data input end thereof and a drive data generating section 32 on a data output end thereof. In addition, the video data output device 101 includes a backlight driving section 33 (light source driving section) that generates the backlight control signal 110.

The data input section 31 is fed an image data signal, generates current video data as frame data synchronized with a frame synchronization signal, and then outputs the current video data to the computing sections 10 and 20.

The drive data generating section 32 is fed the current video data having been subjected to a gray scale transition emphasis process as necessary by the computing section 10, and then converts the current video data into drive data for driving pixels of the liquid crystal display 102.

The backlight driving section 33 generates the backlight control signal 110. The backlight for the liquid crystal display 102 is a plurality of light sources, for example, a fluorescent tube or an LED array, which are placed in parallel with horizontal lines of pixels aligned in a two-dimensional manner on an image display surface of a display section 41, which will be described later. The above-described backlight may be replaced by a sidelight-type light source being made up entirely of (a) an LED array arranged on one side of the display section 41, which side is perpendicular to the horizontal lines of the pixels, and (b) optical components used in combination, such as a light guide plate, a reflection plate, and a diffusion plate.

Such a backlight is turned on and off by the backlight control signal 110 in synchronization with horizontal line scanning of the pixels. More specifically, the backlight is turned off in a first frame coming immediately after the switching to the right-eye image 1 or the left-eye image 2, while the backlight is turned on in a frame other than the first frame coming immediately after the switching.

In addition, as shown in Fig. 3A, in a case where the object to be stereoscopically displayed is shown in some region of the image display surface, it is essential only that the right-eye image 1 and the left-eye image 2 in such a region be visually recognized separately by the observer. Therefore, at least backlights corresponding to the region may be turned on and off in synchronization with scanning of a plurality of horizontal lines arranged in the region.

The liquid crystal display 102 is, for example, an active matrix type liquid crystal display device. The liquid crystal display 102 includes not only the display section 41 but also a gate driving section 42, a source driving section 43, and a common electrode driving section 44.

Although detailed illustration is omitted in Fig. 9, the display section 41 has a plurality of scan signal lines arranged in parallel to each other, a plurality of data signal lines arranged in parallel to each other, and pixels aligned in a matrix manner.

Each of the pixels in the display section 41 is made up of components including a switching element, such as a TFT, and a liquid crystal capacitor, for example. In such a pixel, a gate of the TFT is connected to the scan signal line, the one electrode of the liquid crystal capacitor is connected to a data signal line via a drain of the TFT, and the other electrode of the liquid crystal capacitor is connected to a common electrode line common to all of the pixels.

The gate driving section 42 outputs a scan signal for sequentially selecting a scan signal line, and the source driving section 43 drives a selected pixel in accordance with the drive data. The common electrode driving section 44 supplies a voltage to be applied to the common electrode line.

Note that the computing sections 10 and 20 can be integrated into an LSI with the gate driving section 42, the source driving section 43, and the common electrode driving section 44. Further, the gate driving section 42, the source driving section 43, and the common electrode driving section 44 can be incorporated as a monolithic circuit into the display section 41.

### (Operation of the Stereoscopic Video Image Display Device)

With the above-described configuration, the computing section 10 is fed the current video data and the storage data, which is data in a frame immediately preceding the frame corresponding to the current video data, from the data input section 31 and the frame memory 13, respectively. Then, the computing section 10 generates emphasized video data by carrying out the first gray scale transition emphasis process to make transition from the storage data to the current video data.

Fig. 7 is a graph showing a variation in the luminance (gray scale) of the target pixel A which belongs to the parallax region a1, for example, with respect to a gray scale combination different from the combination shown in Fig. 1, in a case where the right-eye image 1 and the left-eye image 2 are displayed in such a manner that switching between the right-eye image 1 and the left-eye image 2 is done once every two frames.

In the example illustrated in (a) of Fig. 7, the gray scale of the target pixel A makes transition between 128 gray scale, which corresponds to the first display luminance for displaying the object to be stereoscopically displayed, and 0 gray scale, which corresponds to the second display luminance for displaying the background image. Therefore, the computing section 10 is fed, as the current video data of the left-eye image 2, data indicative of 0 gray scale of the frame F1 from the data input section 31, and the computing section 10 is fed, as the storage data in a frame immediately preceding the frame F1, data indicative of 128 gray scale from the frame memory 13.

Subsequently, the computing section 10 reads "0" as OS parameter corresponding to a combination of 128 input gray scale and 0 output gray scale from the LUT1-1, and then outputs video data indicative of 0 gray scale to the drive data generating section 32. The process of reading the OS parameter from the LUT1-1 and then outputting video data corresponding to the OS parameter corresponds to the first gray scale transition emphasis process. However, in a case where the output gray scale is 0, no emphasis process can be practically carried out.

Then, the drive data generating section 32 generates drive data indicative of 0 gray scale for the frame F1, and drives the target pixel A via the source driving section 43.

In parallel with the operation of the computing section 10, the computing section 20 is fed the data indicative of 0 gray scale and the data indicative of 128 gray scale from the data input section 31 and from the frame memory 13, respectively, in the same manner as the computing section 10, and then reads "49" as a first prediction parameter corresponding to the combination of 128 input gray scale and 0 output gray scale from the LUT1-2. The first prediction parameter "49" thus read is rewritten into the frame memory 13.

As mentioned previously, the first prediction parameter "49" indicates a gray scale which the gray scale of the target pixel A will practically reach at the end of the frame F1. Also, the first prediction parameter indicates a gray scale at the beginning of the frame F2.

In the subsequent frame F2, the current video data of the left-eye image 2 is the same as the current video data in the frame F1, i.e. data indicative of 0 gray scale. Therefore, each of the computing sections 10 and 20 is fed current video data indicative of 0 gray scale and data corresponding to the first prediction parameter "49" from the data input section 31 and the frame memory 13, respectively.

For the subsequent gray scale transition emphasis process, the computing section 10 makes access to the LUT2-1 to obtain "0" as the OS parameter corresponding to the combination of 49 input gray scale and 0 output gray scale. In this case, the OS parameter is obtained by interpolation operation. Since the output gray scale is "0" as in the frame F1, no emphasis process can also be practically carried out in the subsequent gray scale transition emphasis process.

The drive data generation section 32 generates drive data indicative of 0 gray scale for the frame F2, and then drives the target pixel A via the source driving section 43.

Meanwhile, the computing section 20 makes access to the LUT2-2 to obtain "21" as the second prediction parameter corresponding to the combination of 49 input gray scale and 0 output gray scale by interpolation operation. The second prediction parameter "21" indicates a gray scale which the gray scale of the target pixel A will practically reach at the end of the frame F2. Also, the second prediction parameter indicates a gray scale at the beginning of the frame F3.

In some cases, there may occur the failure that the gray scale of the target pixel A does not reach the target gray scale even when the gray scale transition emphasis processes have been carried out over the two frames in the above-described manner. In view of this, LUT3-1 and LUT3-2 may be prepared to store additional OS parameters and additional prediction parameters, respectively in preparation for the third gray scale transition emphasis process. In this case, the right-eye image 1 and the left-eye image 2 are displayed in such a manner that switching between them is done once every three frames.

In the subsequent frame F3, the left-eye image 2 of 0 gray scale is changed to the right-eye image 1 of 128 gray scale. Therefore, each of the computing sections 10 and 20 is fed current video data indicative of 128 gray scale and data corresponding to the second prediction parameter "21" from the data input section 31 and the frame memory 13, respectively.

For the first gray scale transition emphasis process to be carried out for the right-eye image 1, the computing section 10 makes access again to the LUT1-1 to obtain "222" as the OS parameter corresponding to the combination of 21 input gray scale and 128 outputs gray scale by interpolation operation.

As a result of this, the drive data generation section 32 generates emphasized drive data corresponding to 222 gray scale for the frame F3, and then drives the target pixel A via the source driving section 43.

Meanwhile, the computing section 20 makes access to the LUT2-1 to obtain "122" as the first prediction parameter corresponding to the combination of 21 input gray scale and 128 output gray scale by interpolation operation. As shown in (b) of Fig. 7, the first prediction parameter "122" indicates a gray scale which the gray scale of the target pixel A will practically reach at the end of the frame F3. Also, the first prediction parameter "122" indicates a gray scale at the beginning of the frame F₄.

In the subsequent frame F4, the current video data of the right-eye image 1 is the same as the current video data in the frame F3, i.e. data indicative of 128 gray scale. Therefore, each of the computing sections 10 and 20 is fed current video data indicative of 128 gray scale and data corresponding to the first prediction parameter "122" from the data input section 31 and the frame memory 13, respectively.

For the subsequent gray scale transition emphasis process, the computing section 10 makes access to the LUT2-1 to obtain "140" as the OS parameter corresponding to the combination of 122 input gray scale and 128 output gray scale by interpolation operation.

As a result of this, the drive data generation section 32 generates emphasized drive data corresponding to 140 gray scale for the frame F4, and then drives the target pixel A via the source driving section 43.

Meanwhile, the computing section 20 makes access to the LUT2-2 to obtain "130" as the second prediction parameter corresponding to the combination of 122 input gray scale and 128 output gray scale by interpolation operation. As shown in (b) of Fig. 7, the second prediction parameter "130" indicates a gray scale which the gray scale of the target pixel A will practically reach at the end of the frame F4.

The frame F4 is a visual recognition period for the right-eye image 1. In the frame F4, a gray scale at the beginning thereof is 122, and a gray scale at the end thereof is 130. As a result, 128 gray scale corresponding to the average luminance can be achieved.

As described above, the gray scale transition emphasis processes are carried out as necessary. That is, there is no need to carry out the gray scale transition emphasis process with respect to some differences in luminance (differences in gray scale) of the target pixel A between the current video data and the storage data. In a case where there is no need to carry out the gray scale transition emphasis process, the computing section 10 outputs the current video data as it is. Further, in a case where the output gray scale is 0 as the minimum gray scale or 255 as the maximum gray scale, the gray scale transition emphasis process cannot be carried out. Therefore, the current video data corresponding to the 0 minimum gray scale or 255 maximum gray scale is outputted as it is.

The emphasized video data or the current video data outputted from the computing section 10 turns into drive data for controlling the luminance of the target pixel A (or B) which belongs to the parallax region a1 (or a2).

Meanwhile, the computing section 20 is fed the same data (the current video data and the storage data) as the data used in the gray scale transition emphasis process carried out by the computing section 10, obtains prediction data corresponding to a predicted luminance which the luminance of the target pixel A will reach through the gray scale transition emphasis process carried out by the computing section 10, and then rewrites the thus obtained prediction data as the storage data into the frame memory 13.

The prediction data may be obtained by operation, as the need arises, on the basis of the video data before gray scale transition and the video data after gray scale transition. However, The prediction data stored in advance in the LUT2-1 or the LUT2-2 enables a simplification of the process.

The computing section 20 obtains the prediction data corresponding to a luminance which the luminance of the target pixel A will reach through the first gray scale transition emphasis process carried out by the computing section 10. This brings about the following advantages. That is, in a case where the prediction data is lower than target current video data, the second gray scale transition emphasis process is carried out by the computing section 10 in accordance with (i) the prediction data and (ii) current video data in a frame subsequent to the frame corresponding to the current video data used to obtain the prediction data.

As a result of this, it is possible to facilitate the luminance of the target pixel A to more accurately reach the target display luminance through the gray scale transition emphasis process separated in at least two stages, in which the intensities of then gray scale transition emphasis processes vary as appropriate depending upon the degree of transition.

Note that in a case where prediction data has reached target current video data through the first gray scale transition emphasis process carried out for the first frame out of the frame set, e.g. in a case of prediction data in an area where no dots are indicated (for example, prediction parameter "96" corresponding to the combination of 192 input gray scale and 96 outputs gray scale) in the LUT1-2 shown in Fig. 6, such prediction data matches current video data corresponding to a frame subsequent to the frame of the current video data used to obtain the prediction data. Therefore, since the computing section 10 does not need to carry out the gray scale transition emphasis process, the computing section 10 outputs the current video data as it is.

The following will elaborate on the stereoscopic video image display method and the stereoscopic video image display device according to the present invention.

A stereoscopic video image display method according to the present invention is such that in a case where the luminance of the target pixel can reach a third display luminance beyond the target display luminance at an end of a frame other than the first frame that comes immediately after the switching out of the frames making up the frame set, an emphasis level of the gray scale transition emphasis process to be carried out in a frame other than the first frame coming immediately after the switching is determined selectively according to the transition in display luminance so that the luminance of the target pixel reaches the third display luminance.

As described previously, in a stereoscopic video image display method according to the present invention, (1) a gray scale transition emphasis process is carried out so that an average luminance of the target pixel during the visual recognition period becomes substantially equal to the target display luminance or (2) a gray scale transition emphasis process is carried out so that an average luminance of the target pixel during a period from a beginning of a second frame until a subsequent switching becomes substantially equal to the target display luminance.

In the case (1), the average luminance becomes substantially equal to the target display luminance when the luminance of the target pixel, without reaching the target display luminance at the beginning of the visual recognition period, reaches the third display luminance beyond the target display luminance at the end of the visual recognition period. In the case (2), the average luminance becomes substantially equal to the target display luminance when the luminance of the target pixel, without reaching the target display luminance at the beginning of the second frame, reaches the third display luminance beyond the target display luminance at the point in time of the subsequent switching.

Whether the luminance of the target pixel reaches the target display luminance at the beginning of the visual recognition period or at the beginning of the second frame through the gray scale transition emphasis process varies depending upon gray scale transition, in other words, depending upon a start gray scale and an end gray scale. In a case where the luminance of the target pixel reaches the target display luminance at the beginning of the visual recognition period or at the beginning of the second frame, no further gray scale transition emphasis process is needed.

The third display luminance beyond the target display luminance exists when the target display luminance is a gray scale other than 0 gray scale or other than a maximum gray scale.

Therefore, according to the above arrangement, an emphasis level of the gray scale transition emphasis process to be carried out in a frame other than the first frame coming immediately after the switching is determined selectively according to the transition of display luminance so that the luminance of the target pixel reaches the third display luminance. Therefore, it is possible to reliably obtain the effect that the average luminance of the target pixel becomes substantially equal to the target display luminance.

The stereoscopic video image display method according to the present invention is such that
a minimum gray scale common to the first display luminance and the second display luminance is set to be a predetermined gray scale other than 0 gray scale.

According to the above arrangement, in a case where the minimum gray scale is 0, i.e. black, there is no minus gray scale which is lower than 0 gray scale. Therefore, a gray scale transition emphasis process for transition from a gray scale other than 0 gray scale to 0 gray scale cannot be carried out.

This may cause a failure to reach 0 gray scale even at the end of a frame coming immediately before the switching out of the frames making up the frame set. In particular, in a case where the number of frames in the frame set is two, there may occur the failure that 0 gray scale is not reached even at the end of the second frame (at the point in time of switching). Therefore, when the second display luminance for displaying the background image is 0, and the first display luminance for displaying the object to be stereoscopically displayed is other than 0, switching to the first display luminance takes place in such a state that the display luminance in the parallax region does not reach 0. This results in the occurrence of crosstalk that would be visually recognized in a state that the parallax region is floated in the black background image.

In view of this, setting the minimum gray scale to a predetermined gray scale other than 0 gray scale enables a gray scale transition emphasis process for accelerating reaching the minimum gray scale.

Note that setting the minimum gray scale to the predetermined gray scale other than 0 gray scale means that the background image is shown with a color of sightly greyish black, rather than black. However, setting the minimum gray scale to the predetermined gray scale other than 0 gray scale enables reduction of the occurrence of crosstalk which is more obtrusive in blackish display than in whitish display. This produces a great effect of enhancing display quality of the stereoscopic video image.

The first processing section in the stereoscopic video image display device according to the present invention includes:
(8) a first lookup table having stored therein first parameters intended for a first gray scale transition emphasis process to be carried out for transition from of the storage data in the frame memory to current video data corresponding to a first frame out of the frame set; and
(9) a second lookup table having stored therein second parameters intended for a subsequent gray scale transition emphasis process to be carried out for transition from first prediction data, which the second processing section has obtained as the prediction data in connection with the first gray scale transition emphasis process, to current video data corresponding to a subsequent frame out of the frame set.

According to the above arrangement, the first processing section can generate emphasized video data for each gray scale transition emphasis process in two stages, by such a simple processing that the first processing section reads necessary parameters from two lookup tables.

Further, by selectively differentiating values of the first parameters from values of the second parameters in accordance with the degree of transition, the first processing section can selectively subject the current video data corresponding to each of the constituent frames to a gray scale transition emphasis process with a different intensity, in accordance with a degree of transition from the storage data to the current video data.

A stereoscopic video image display device according to the present invention is such that the second parameters include, in accordance wit a degree of transition from the first prediction data to the current video data, parameters for causing the luminance of the target pixel to reach a third display luminance beyond the target display luminance, the parameters being intended for the subsequent gray scale transition emphasis process to be carried out so that an average luminance of the target pixel during a visual recognition period in which the observer is allowed to visually recognize a stereoscopic video image becomes substantially equal to the target display luminance, which is either the first display luminance or the second display luminance.

According to the above arrangement, as mentioned previously, when the average luminance during the visual recognition period becomes subsequently equal to the target display luminance, visual recognition of the crosstalk by the observer can be avoided. At the beginning of the visual recognition period (i.e. immediately after the switching between the right-eye image and the left-eye image), the luminance of the target pixel is lower than the target display luminance. Therefore, in order to make the average luminance during the visual recognition period substantially equal to the target display luminance, the luminance of the target pixel should be caused to reach the third display luminance beyond the target display luminance, at the end of the visual recognition period.

The second parameters include, in accordance with a degree of transition from the first prediction data to the current video data, parameters for causing the luminance of the target pixel to reach such a third display luminance. Note that in a case where transition is made such that the first prediction data becomes equal to the current video data through the first gray scale transition emphasis process, a parameter for causing the first processing section to directly output the current video data as it is should be set as the second parameter.

The second processing section in the stereoscopic video image display device according to the present invention includes:
(10) a third lookup table in which third parameters for obtaining the first prediction data from which the first processing section obtains regarding the first gray scale transition emphasis process carried out by the first processing section are stored to be associated with the storage data and the current video data; and
(11) a fourth lookup table in which fourth parameters from which the second processing section obtains the second prediction data as the prediction data regarding the subsequent gray scale transition emphasis process are stored to be associated with the first prediction data and the current video data.

According to the above arrangement, the second processing section can obtain prediction data for each gray scale transition emphasis process in two stages, by such a simple processing that the second processing section reads necessary parameters from two lookup tables.

Further, by selectively differentiating values of the third parameters from values of the fourth parameters in accordance with the degree of gray scale transition emphasis process for each of the constituent frames, the second processing section can obtain prediction data corresponding to an intensity of the gray scale transition emphasis process.

A stereoscopic video image display device according to the present invention is such that the first and third parameters are used in a first frame that comes immediately after the switching to the right-eye image or the left-eye image, and the second and fourth parameters are used in at least one subsequent frame that follows the first frame.

With this arrangement, in the frame coming immediately after the switching, the gray scale transition emphasis process using the first parameter is carried out in accordance with the degree of gray scale transition, and prediction data (gray scale that is predicted to be reached) corresponding to an intensity of such a gray scale transition emphasis process can be obtained by using the second parameter.

Further, in at least one subsequent frame, the gray scale transition emphasis process using the third parameter can be selectively carried out with a different intensity in accordance with the degree of gray scale transition, and prediction data (gray scale that is predicted to be reached) corresponding to an intensity of such a gray scale transition emphasis process can be obtained by using the fourth parameter.

A stereoscopic video image display device according to the present invention further includes:
a light source driving section for driving a light source corresponding to a given pixel so that the light source, which emits light from a back side of the image display surface, is turned off in the first frame coming immediately after the switching to the right-eye image or the left-eye image for the given pixel, while the light source is turned on in a frame other than the first frame coming immediately after the switching.

With this arrangement, the light source is switched between an on-state and an off-state at a high speed on a frame-by-frame basis. Therefore, even when shutter glasses which open and close at a slow response speed on a frame-by-frame basis is used, it is possible to excellently produce a visual recognition period of a stereoscopic video image.

Note that since a light source corresponding to a given pixel can be switched between an on-state and an off-state, light sources are sequentially switched between an on-state and an off-state in part on the display screen. For example, assume that the light source can be switched between an on-state and an off-state in synchronization with scanning of pixels in one line or in multiple lines, and a display screen is divided into a plurality of areas. In this case, it is possible that the light source is driven in such a manner that the light source is sequentially switched between the on-state and the off-state in such areas. This makes it possible to enhance display quality of a stereoscopic image.

The present invention is not limited to the aforementioned embodiments and is susceptible of various changes within the scope of the accompanying claims. That is, embodiments obtained by suitable combinations of technical means disclosed in different embodiments are also included within the technical scope of the present invention.

### Industrial Applicability

The present invention is suitably applicable to all devices having display screens, like mobile phones, PDAs (Personal Digital Assistants), notebook or desktop computers, televisions of various kinds of sizes, ATMs, and automatic ticket vending machines.

### Reference Signs List

1 Right-eye image
2 Left-eye image
3 Image display surface
11 First processing section
12 Second processing section
13 Frame memory
33 Backlight driving section (Light source driving section)
101 Video data output device (Stereoscopic video image display device)
102 Liquid crystal display (Stereoscopic video image display device)
a1 Parallax region
a2 Parallax region
α Background gray scale (Second display luminance)
β Object gray scale (First display luminance)
γ Background gray scale (Second display luminance)
δ Object gray scale (First display luminance)
LUT1-1 (First lookup table)
LUT2-1 (Second lookup table)
LUT1-2 (Third lookup table)
LUT2-2 (Fourth lookup table)

## Claims

1. A stereoscopic video image display method of displaying a right-eye image and a left-eye image, both of which accommodate a parallax allowing an observer to visually recognize a stereoscopic video image, on an image display surface in such a manner that switching between the right-eye image and the left-eye image is done once every frame set, and that luminance provided by a target pixel which belongs to a parallax region that forms a parallax between the right-eye image and the left-eye image makes transition between a first display luminance for displaying an object to be stereoscopically displayed and a second display luminance for displaying a background image,
wherein
a gray scale transition emphasis process is carried out in each of frames making up the frame set, and
the gray scale transition emphasis process is carried out so that an average luminance of the target pixel during a visual recognition period in which the observer is allowed to visually recognize a stereoscopic video image becomes substantially equal to a target display luminance, which is either the first display luminance or the second display luminance.

2. A stereoscopic video image display method of displaying a right-eye image and a left-eye image, both of which accommodate a parallax allowing an observer to so recognize a stereoscopic video image, on an image display surface in such a manner that switching between the right-eye image and the left-eye image is done once every frame set, and that luminance provided by a target pixel which belongs to a parallax region that forms a parallax between the right-eye image and the left-eye image makes transition between a first display luminance for displaying an object to be stereoscopically displayed and a second display luminance for displaying a background image,
wherein
a gray scale transition emphasis process is carried out in each of frames making up the frame set, and
the gray scale transition emphasis process is carried out so that, in a frame other than a first frame that comes immediately after switching to the right-eye image or the left-eye image, an average luminance of the target pixel during a period from a beginning of a second frame until a subsequent switching is substantially equal to a target display luminance, which is either the first display luminance or the second display luminance.

3. The stereoscopic video image display method according to claim 1 or 2, wherein
in a case where the luminance of the target pixel can reach a third display luminance beyond the target display luminance at an end of a frame other than the first frame that comes immediately after the switching out of the frames making up the frame set, an emphasis level of the gray scale transition emphasis process to be carried out in a frame other than the first frame coming immediately after the switching is determined selectively according to the transition in display luminance so that the luminance of the target pixel reaches the third display luminance.

4. The stereoscopic video image display method according to any one of claims 1 through 3, wherein
a minimum gray scale common to the first display luminance and the second display finance is set to be a predetermined gray scale other than 0 gray scale.

5. A stereoscopic video image display device comprising:
an image display surface on which a right-eye image and a left-eye image, both of which accommodate a parallax allowing an observer to visually recognize a stereoscopic video image, are displayed in such a manner that switching between the right-eye image and the left-eye image is done once every frame set, and that luminance provided by a target pixel which belongs to a parallax region that forms a parallax between the right-eye image and the left-eye image makes transition between a first display luminance for displaying an object to be stereoscopically displayed and a second display luminance for displaying a background image,
the stereoscopic video image display device further comprising:
a first processing section;
a second processing section; and
a frame memory,
wherein the first and second processing sections are fed (i) current video data corresponding to a video signal of a current frame of the right-eye image or the left-eye image and (ii) storage data of the frame memory which is refreshed once every frame in accordance with output of the second processing section;
in order to cause the luminance provided by the target pixel to reach a target display luminance, which is either the first display luminance or the second display luminance, the first processing section generates emphasized video data by selectively subjecting the current video data corresponding to each of the constituent frames that make up the frame set to a gray scale transition emphasis process with a different intensity, in accordance with a degree of transition from the storage data to the current video data which corresponds to each of constituent frames; and
the second processing section obtains, on a basis of the storage data and the current video data, prediction data corresponding to a predicted luminance which the luminance provided by the target pixel will reach through the gray scale transition emphasis process, in accordance with an intensity of the gray scale transition emphasis process for each of the constituent frames, and then rewrites the thus obtained prediction data as the storage data into the frame memory.

6. The stereoscopic video image display device according to claim 5, wherein
the first processing section includes:
a first lookup table having stored therein first parameters intended for a first gray scale transition emphasis process to be carried out for transition from the storage data in the frame memory to current video data corresponding to a first frame out of the frame set; and
a second lookup table having stored therein second parameters intended for a subsequent gray scale transition emphasis process to be carried out for transition from first prediction data, which the second processing section has obtained as the prediction data in connection with the first gray scale transition emphasis process, to current video data corresponding to a subsequent frame out of the frame set.

7. The stereoscopic video image display device according to claim 6, wherein
the second parameters include, in accordance with a degree of transition from the first prediction data to the current video data, parameters for causing the luminance of the target pixel to reach a third display luminance beyond the target display luminance, the parameters being intended for the subsequent gray scale transition emphasis process to be carried out so that an average finance of the target pixel during a visual recognition period in which the observer is allowed to visually recognize a stereoscopic video image becomes substantially equal to the target display luminance, which is either the first display luminance or the second display luminance,

8. The stereoscopic video image display device according to claim 6 or 7, wherein
the second processing section includes:
a third lookup table in which third parameters for obtaining the first prediction data from which the first processing section obtains regarding the first gray scale transition emphasis process carried out by the first processing section are stored to be associated with the storage data and the current video data; and
a fourth lookup table in which fourth parameters from which the second processing section obtains the second prediction data as the prediction data regarding the subsequent gray scale transition emphasis process are stored to be associated with the first prediction data and the current video data.

9. The stereoscopic video image display device according to claim 8, wherein
the first and third parameters are used in a first frame that comes immediately after the switching to the right-eye image or the left-eye image, and the second and fourth parameters are used in at least one subsequent frame that follows the first frame.

10. The stereoscopic video image display device according to any one of claims 5 through 9, further comprising:
a light source driving section for driving a light source corresponding to a given pixel so that the light source, which emits light from a back side of the image display surface, is turned off in the first frame coming immediately after the switching to the right-eye image or the left-eye image for the given pixel, while the light source is turned on in a frame other than the first frame coming immediately after the switching.
